(19) Europäisches Patentamt
European Patent Office
Office européen des brevets

(11) **EP 4 557 657 A1**

(12) **EUROPEAN PATENT APPLICATION**
published in accordance with Art. 153(4) EPC

(43) Date of publication:
**21.05.2025   Bulletin 2025/21**

(21) Application number: **23849364.7**

(22) Date of filing: **31.07.2023**

(51) International Patent Classification (IPC):
*H04L 5/00* *(2006.01)*

(52) Cooperative Patent Classification (CPC):
**H04B 7/0456; H04B 7/06; H04L 5/00**

(86) International application number:
**PCT/CN2023/110316**

(87) International publication number:
**WO 2024/027657 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.08.2022   CN 202210916121
16.09.2022   CN 202211130878**

(71) Applicant: **Huawei Technologies Co., Ltd.
Shenzhen, Guangdong 518129 (CN)**

(72) Inventors:
• **HE, Hongli
Shenzhen, Guangdong 518129 (CN)**
• **LI, Xueru
Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD, NETWORK DEVICE AND FIRST RELAY DEVICE**

(57)    This application provides a communication method. The communication method includes: A network device sends, to a first relay device, first information indicating a first time unit, a second time unit, and a first phase. The network device sends a first reference signal to a terminal device in the first time unit and the second time unit. The network device receives second information from the terminal device, where the second information indicates a first phase difference or a PMI associated with the first reference signal, and the first phase difference or the PMI and the first phase are used to determine an association relationship between the first relay device and the terminal device. The network device configures a corresponding phase for a relay device, so that an association relationship between the terminal device and the relay device can be determined based on a phase difference or a PMI reported by the terminal device and the phase configured for the relay device.

FIG. 6

# Description

This application claims priorities to Chinese Patent Application No. 202210916121.5, filed with the China National Intellectual Property Administration on August 1, 2022 and entitled "ASSOCIATION RELATIONSHIP MEASUREMENT METHOD, TERMINAL DEVICE, AND NETWORK DEVICE", and to Chinese Patent Application No. 202211130878.8, filed with the China National Intellectual Property Administration on September 16, 2022 and entitled "COMMUNICATION METHOD, NETWORK DEVICE, AND FIRST RELAY DEVICE", both of which are incorporated herein by reference in their entireties.

## TECHNICAL FIELD

Embodiments of this application relate to the field of communication technologies, and more specifically, to a communication method, a network device, and a first relay device.

## BACKGROUND

When there are a plurality of network controlled repeaters (Network controlled repeaters, NCR) in coverage of a network device, and the NCR is configured to forward a signal between the network device and a terminal device, the network device needs to control a beam, on/off, and the like of the NCR based on a status of a terminal device served by the NCR. For example, when there is no terminal device that needs to be served in coverage of the NCR, the network device may control the NCR to turn off a forwarding channel. For another example, at a high frequency, the network device may control the beam of the NCR based on a location of the terminal device served by the NCR, so that the beam of the NCR is aligned with the terminal device, thereby increasing signal strength of the terminal device.

## SUMMARY

Therefore, when there are a plurality of NCRs under one network device, the network device first needs to determine an association relationship between a terminal device and the NCR.

This application provides a communication method, a network device, and a first relay device, so that the network device can determine an association relationship between a terminal device and a relay device based on information reported by the terminal device and a phase configured by the network device for the relay device.

According to a first aspect, a communication method is provided. The method may be performed by a network device, or may be performed by a component (for example, a chip or a circuit) of the network device. This is not limited in this application. For ease of description, the following uses an example in which the network device performs the method for description.

The communication method includes: A network device sends first information to a first relay device, where the first information indicates a first time unit, a second time unit, and a first phase; the network device sends a first reference signal to a terminal device in the first time unit and the second time unit; and the network device receives second information from the terminal device, where the second information indicates a first phase difference or a precoding matrix index PMI, the first phase difference is associated with the first reference signal, the PMI is used to indicate a precoding matrix, and the precoding matrix is associated with the first reference signal.

The first phase difference and the first phase are used to determine an association relationship between the first relay device and the terminal device; or the PMI and the first phase are used to determine an association relationship between the first relay device and the terminal device.

Alternatively,

the network device determines an association relationship between the first relay device and the terminal device based on the first phase difference and the first phase; or the network device determines an association relationship between the first relay device and the terminal device based on the PMI and the first phase.

Specifically, that the first information indicates a first time unit, a second time unit, and a first phase includes:

the first information indicates the first relay device to perform downlink forwarding in the first time unit and the second time unit, and indicates that the second time unit is superimposed with the first phase compared with the first time unit when the first relay device performs downlink forwarding.

Based on the foregoing technical solution, the network device sends, to a relay device, information indicating a time unit (for example, the first information indicating the first time unit and the second time unit), so that the relay device performs downlink forwarding in the indicated time unit, and the network device sends, to the relay device, information indicating a phase (for example, the first information indicating the first phase), so that a phase change is considered when the relay device performs downlink forwarding in different time units (for example, the second time unit is superimposed with the first phase compared with the first time unit when downlink forwarding is performed).

In addition, in the foregoing technical solution, the network device sends the first reference signal in the time unit corresponding to the relay device, and the terminal device reports information associated with the first reference signal, for example, the first phase difference or the PMI. It may be understood that if the terminal device is in coverage of the first relay device and the first relay device performs serving, the first phase difference (for example, a phase difference that is determined based on the first reference signal and that is between an equivalent channel in the second time unit and an equivalent channel in the first time unit) reported by the terminal device should be equal to or close to the first phase configured by the network device for the first relay device. The first relay device additionally superimposes the first phase in the second time unit based on a configuration of the network device when downlink forwarding is performed for the terminal device, in other words, the first phase is additionally superimposed on the equivalent channel in the second time unit of the network device and the terminal device compared with the equivalent channel in the first time unit of the network device and the terminal device.

In conclusion, in the foregoing technical solution, the network device may determine an association relationship between the terminal device and the relay device based on a phase difference reported by the terminal device and a phase configured by the network device for the relay device.

With reference to the first aspect, in some implementations of the first aspect, the first phase is one phase in a first phase set, the first phase set includes N phases, and N is a positive integer.

With reference to the first aspect, in some implementations of the first aspect, before the network device sends the first information to the first relay device, the method further includes: The network device sends third information to the first relay device, where the third information indicates the first phase set.

With reference to the first aspect, in some implementations of the first aspect, that the first information indicates a first phase includes: the first information includes information about a first index, and the first index indicates an index of the first phase in the first phase set.

With reference to the first aspect, in some implementations of the first aspect, that a network device sends first information to a first relay device includes: The network device sends first multicast information to the first relay device, where the first multicast information includes the first information.

Specifically, the first multicast information includes information about a plurality of indexes, an index of the first phase in the first phase set is a first index, and the first index is one of the plurality of indexes. The method further includes:

The network device sends first location information to the first relay device, where the first location information indicates a location of the first index in the plurality of indexes.

With reference to the first aspect, in some implementations of the first aspect, that a network device sends first information to a first relay device includes: The network device sends second multicast information to the first relay device, where the second multicast information includes the first information.

Specifically, the second multicast information includes indication information of a plurality of phases, and the first phase is one of the plurality of phases. The method further includes: The network device sends second location information to the first relay device, where the second location information indicates a location of the first phase in the plurality of phases.

Based on the foregoing technical solution, the network device may simultaneously send multicast information (for example, the first multicast information and/or the second multicast information) to a plurality of relay devices, and does not need to send indication information of a time unit and a phase to each relay device, thereby simplifying a configuration process.

With reference to the first aspect, in some implementations of the first aspect, the first phase difference is one phase in a second phase set, the second phase set includes a plurality of phases.

With reference to the first aspect, in some implementations of the first aspect, N is equal to N', and the first phase set and the second phase set each include:

$$\left\{ 0, \frac{2\pi}{N}, \frac{4\pi}{N}, ..., \frac{2(N-1)\pi}{N} \right\}.$$

For example, the network device may send indication information of a positive integer N to the relay device and the terminal device, the relay device may determine the first phase set based on the positive integer, and the terminal device may determine the second phase set based on the positive integer.

It should be understood that the network device may send indication information of different positive integers to the relay device and the terminal device. For example, the network device may send indication information of a positive integer N to the relay device, and the relay device may determine the first phase set based on the positive integer. The network device may send indication information of a positive integer N' to the terminal device, and the terminal device may determine the second phase set based on the positive integer.

With reference to the first aspect, in some implementations of the first aspect, the method further includes: The network device sends fourth information to the first relay device, where the fourth information indicates the first relay device to turn off a forwarding channel in a third time unit, and the third time unit is a time unit other than the first time unit and the second time unit.

Based on the foregoing technical solution, the network device may further indicate, based on the fourth information, the first relay device to turn off the forwarding channel in the time unit other than the first time unit and the second time unit, to prevent the first relay device from causing interference to another relay device.

With reference to the first aspect, in some implementations of the first aspect, the method further includes: The network device sends fifth information to a second relay device, where the fifth information indicates the first time unit, the second time unit, and a second phase; and the network device determines an association relationship between the second relay device and the terminal device based on the first phase difference and the second phase; or the network device determines an association relationship between the second relay device and the terminal device based on the PMI and the second phase.

Based on the foregoing technical solution, the network device may send, to different relay devices, information indicating a time unit and information indicating a phase. For example, the network device indicates a same first time unit location and a same second time unit location to a plurality of relay devices, and indicates different phase information, so that the network device can determine association relationships between the terminal device and the plurality of relay devices based on a phase difference or a PMI reported by the terminal device, provided that the network device sends the reference signal once, thereby reducing resource overheads of association relationship measurement.

With reference to the first aspect, in some implementations of the first aspect, the first relay device and the second relay device belong to a first relay device group, and the first relay device group corresponds to the first time unit and the second time unit.

Based on the foregoing technical solution, the network device may configure the relay device in a form of a group granularity, thereby simplifying a process in which the network device configures the relay device.

With reference to the first aspect, in some implementations of the first aspect, when the first phase is equal to the first phase difference or a second phase difference, the first relay device is a relay device corresponding to the terminal device, where the second phase difference is associated with the PMI.

With reference to the first aspect, in some implementations of the first aspect, the method further includes: The network device sends first configuration information to the terminal device, where the first configuration information indicates the terminal device to measure M reference signals and report K phase differences, K is less than or equal to M, and K and M are positive integers; and there are at least two ports for each of the M reference signals, each of the M reference signals includes at least two consecutive time units, the first reference signal is one of the M reference signals, and the first phase difference is one of the K phase differences.

With reference to the first aspect, in some implementations of the first aspect, the method further includes: The network device sends second configuration information to the terminal device, where the second configuration information indicates the terminal device to measure M reference signals and report K PMIs, K is less than or equal to M, and K and M are positive integers; and there are at least four ports for each of the M reference signals, each of the M reference signals includes at least two consecutive time units, the first reference signal is one of the M reference signals, and the PMI is a PMI corresponding to the first reference signal in the K PMIs.

With reference to the first aspect, in some implementations of the first aspect, the second configuration information further includes at least one of the following information: information indicating an antenna dimension of the network device, information indicating a rank of the precoding matrix, or information indicating a codebook type.

According to a second aspect, a communication method is provided. The method may be performed by a first relay device, or may be performed by a component (for example, a chip or a circuit) of the first relay device. This is not limited in this application. For ease of description, the following uses an example in which the first relay device performs the method for description.

The communication method includes: A first relay device receives first information from a network device, where the first information indicates a first time unit, a second time unit, and a first phase; and the first relay device performs downlink forwarding in the first time unit and the second time unit, where the second time unit is superimposed with the first phase compared with the first time unit when the first relay device performs downlink forwarding.

With reference to the second aspect, in some implementations of the second aspect, the first phase is one phase in a first phase set, the phase set includes N phases, and N is a positive integer.

With reference to the second aspect, in some implementations of the second aspect, before the first relay device receives the first information from the network device, the method further includes: The first relay device receives third information from the network device, where the third information indicates the first phase set.

With reference to the second aspect, in some implementations of the second aspect, that the first information indicates a first phase includes: the first information includes information about a first index, and the first index indicates an index of the first phase in the first phase set.

With reference to the second aspect, in some implementations of the second aspect, that a first relay device receives first information from a network device includes: The first relay device receives first multicast information from the network device, where the first multicast information includes the first information. Specifically, the first multicast information includes indication information of a plurality of indexes, an index of the first phase in the first phase set is a first index, and the first index is one of the plurality of indexes. The method further includes: The first relay device receives first location information from the network device, where the first location information indicates a location of the first index in the plurality of indexes.

With reference to the second aspect, in some implementations of the second aspect, that a first relay device receives first information from a network device includes: The first relay device receives second multicast information from the network device, where the second multicast information includes the first information. Specifically, the second multicast information includes indication information of a plurality of phases, and the first phase is one of the plurality of phases.

The method further includes: The first relay device receives second location information from the network device, where the second location information indicates a location of the first phase in the plurality of phases.

With reference to the second aspect, in some implementations of the second aspect, the first phase set includes:

$$\left\{0, \frac{2\pi}{N}, \frac{4\pi}{N}, \dots, \frac{2(N-1)\pi}{N}\right\}.$$

With reference to the second aspect, in some implementations of the second aspect, the method further includes: The first relay device receives fourth information from the network device, where the fourth information indicates the first relay device to turn off a forwarding channel in a third time unit, and the third time unit is a time unit other than the first time unit and the second time unit.

For technical effect of the method shown in the second aspect and the possible designs of the second aspect, refer to the technical effect in the first aspect and the possible designs of the first aspect.

According to a third aspect, a communication method is provided. The method may be performed by a terminal device, or may be performed by a component (for example, a chip or a circuit) of the terminal device. This is not limited in this application. For ease of description, the following uses an example in which the terminal device performs the method for description.

The communication method includes: A terminal device receives a first reference signal from a network device in a first time unit and a second time unit; the terminal device determines a first phase difference based on a first reference signal received in the first time unit and the second time unit, or determines a precoding matrix index PMI based on a measurement result of the first reference signal; and the terminal device sends second information to the network device, where the second information indicates the first phase difference or the PMI.

With reference to the third aspect, in some implementations of the third aspect, the first phase difference is one phase in a second phase set, the second phase set includes N' phases, and N' is a positive integer; and
the second phase set includes:

$$\left\{0, \frac{2\pi}{N'}, \frac{4\pi}{N'}, \dots, \frac{2(N'-1)\pi}{N'}\right\}.$$

With reference to the third aspect, in some implementations of the third aspect, the method further includes: The terminal device receives first configuration information from the network device, where the first configuration information indicates the terminal device to measure M reference signals and report K phase differences, K is less than or equal to M, and K and M are positive integers; and there are at least two ports for each of the M reference signals, each of the M reference signals includes at least two consecutive time units, the first reference signal is one of the M reference signals, and the first phase difference is one of the K phase differences.

With reference to the third aspect, in some implementations of the third aspect, the method further includes: The terminal device receives second configuration information from the network device, where the second configuration information indicates the terminal device to measure M reference signals and report K precoding matrix indexes PMIs, K is less than or equal to M, and K and M are positive integers; and there are at least four ports for each of the M reference signals, each of the M reference signals includes at least two consecutive time units, the first reference signal is one of the M reference signals, and the PMI is a PMI corresponding to the first reference signal in the K PMIs.

With reference to the third aspect, in some implementations of the third aspect, the second configuration information further includes at least one of the following information: information indicating an antenna dimension of the network device, information indicating a rank of the precoding matrix, or information indicating a codebook type.

For technical effect of the method shown in the third aspect and the possible designs of the third aspect, refer to the technical effect in the first aspect and the possible designs of the first aspect.

According to a fourth aspect, a network device is provided. The network device is configured to perform any one of the first aspect and the implementations of the first aspect. Specifically, the network device includes a processor and a memory. The memory is configured to store a computer program. The processor is configured to invoke the computer program from the memory and run the computer program, to enable the network device to perform any one of the first aspect and the implementations of the first aspect.

According to a fifth aspect, a first relay device is provided. The first relay device is configured to perform any one of the second aspect and the implementations of the second aspect. Specifically, the relay device includes a processor and a memory. The memory is configured to store a computer program. The processor is configured to invoke the computer program from the memory and run the computer program, to enable the first relay device to perform any one of the second aspect and the implementations of the second aspect.

According to a sixth aspect, a terminal device is provided. The terminal device is configured to perform any one of the third aspect and the implementations of the third aspect. Specifically, the terminal device includes a processor and a memory. The memory is configured to store a computer program. The processor is configured to invoke the computer program from the memory and run the computer program, to enable the first relay device to perform any one of the third aspect and the implementations of the third aspect.

According to a seventh aspect, a communication apparatus is provided. The communication apparatus is configured to perform the method according to any one of the first aspect and the implementations of the first aspect to any one of the third aspect and the implementations of the third aspect. Specifically, the communication apparatus may include units and/or modules (for example, a processing unit and a transceiver unit) configured to perform the method provided in any one of the first aspect and the implementations of the first aspect to any one of the third aspect and the implementations of the third aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, this application provides a processor, configured to perform the method provided in the first aspect to the third aspect.

Unless otherwise specified, or if operations such as sending and obtaining/receiving related to the processor do not contradict an actual function or internal logic of the operations in related descriptions, all the operations may be understood as operations such as outputting, receiving, and inputting of the processor, and may also be understood as operations such as sending and obtaining/receiving directly performed by a radio frequency circuit and an antenna. This is not limited in this application.

According to a ninth aspect, a computer-readable storage medium is provided. The computer-readable storage medium stores a computer program. When the computer program is run on a communication apparatus, the communication apparatus is enabled to perform the method according to any one of the implementations of the first aspect to the third aspect.

According to a tenth aspect, a computer program product including instructions is provided. When the computer program product runs on a computer, the computer is enabled to perform the method according to any one of the implementations of the first aspect to the third aspect.

According to an eleventh aspect, a chip is provided. The chip includes a processor and a communication interface. The processor reads instructions through the communication interface, to perform the method provided in any one of the implementations of the first aspect to the third aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the implementations of the first aspect to the third aspect.

According to a twelfth aspect, a communication system is provided, including the network device in the fourth aspect, the relay device in the fifth aspect, and the terminal device in the sixth aspect.

**BRIEF DESCRIPTION OF DRAWINGS**

FIG. 1 is a diagram of a communication system 100 to which an embodiment of this application is applicable;
FIG. 2 is a diagram of a structure of an NCR;
FIG. 3 is a diagram of a structure of an RF repeater;
FIG. 4 shows a manner of determining an association relationship between a terminal device and an NCR;
FIG. 5 shows another manner of determining an association relationship between a terminal device and an NCR;
FIG. 6 is a schematic flowchart of a communication method according to an embodiment of this application;
FIG. 7 is a diagram of an example 1 according to an embodiment of this application;
FIG. 8 is a diagram of an example 2 according to an embodiment of this application;
FIG. 9 is a block diagram of a communication apparatus 10 according to an embodiment of this application;
FIG. 10 is a diagram of another communication apparatus 20 according to an embodiment of this application; and
FIG. 11 is a diagram of a chip system 30 according to an embodiment of this application.

**DESCRIPTION OF EMBODIMENTS**

The following describes technical solutions of embodiments in this application with reference to accompanying drawings.

The technical solutions in embodiments of this application are applied to various communication systems, for example, a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application are also applied to a future communication system, for example, a 6th generation mobile communication system. The technical solution provided in embodiments of this application may be further applied to device-to-device (device-to-device, D2D) communication, vehicle-to-everything (vehicle-to-everything, V2X) communication, machine-to-machine (machine to machine, M2M) communication, machine-type communication (machine-type communication, MTC), an internet of things (internet of things, IoT) communication system, or another communication system.

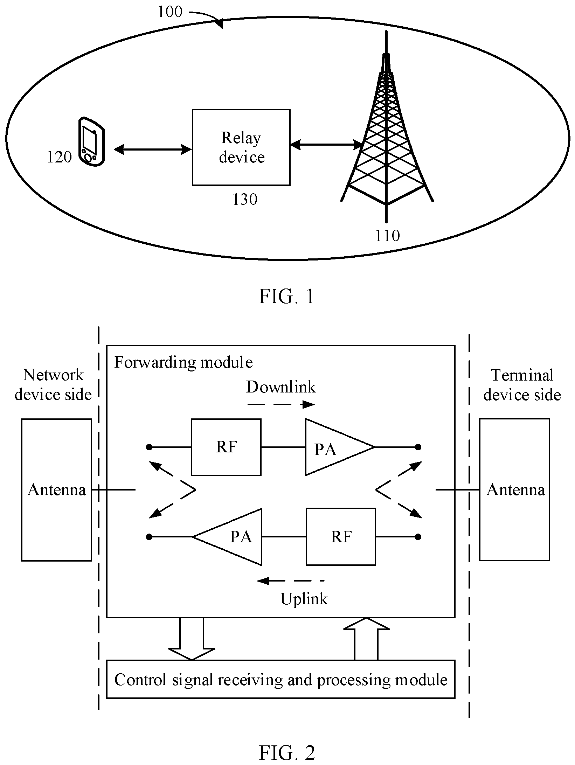

For ease of understanding embodiments of this application, a communication system shown in FIG. 1 is first used as an example to describe in detail the communication system to which embodiments of this application are applicable. FIG. 1 is a diagram of a communication system 100 to which an embodiment of this application is applicable. As shown in FIG. 1, the communication system 100 may include at least one network device, for example, a network device 110 shown in FIG. 1. The communication system 100 may further include at least one terminal device, for example, a terminal device 120 shown in FIG. 1. The communication system 100 may further include at least one relay device, for example, a relay device 130 shown in FIG. 1.

The network device 110 may communicate with the terminal device 120 via the relay device 130. A plurality of antennas may be configured for each communication device, for example, the network device 110, the terminal device 120, and the relay device 130. For each communication device in the communication system 100, the configured plurality of antennas may include at least one transmit antenna configured to send a signal and at least one receive antenna configured to receive a signal. Therefore, the communication devices in the communication system 100, for example, the network device 110 and the relay device 130, the relay device 130 and the terminal device 120 may communicate with each other by using a multi-antenna technology.

The terminal device (terminal equipment) in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

For example, in embodiments of this application, the wearable device may also be referred to as a wearable intelligent device, and is a general term of wearable devices developed by intelligently designing daily wear by using a wearable technology, such as glasses, gloves, watches, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured device that may implement complete or partial functions without depending on a smartphone, for example, a smartwatch or smart glasses. In addition, the device may alternatively be a portable device that is dedicated to only one type of application function and needs to be used together with another device such as a smartphone, for example, various smart bands or smart jewelry for monitoring physical signs.

In addition, in embodiments of this application, the terminal device may alternatively be a terminal device in an IoT system. IoT is an important part in future development of information technologies. A main technical feature of the IoT is to connect things to a network by using a communication technology, to implement an intelligent network for human-machine interconnection and thing-thing interconnection. In embodiments of this application, the IoT technology may implement massive connections, deep coverage, and terminal power saving by using, for example, a narrowband (narrowband, NB) technology.

In addition, in embodiments of this application, the terminal device may further include a sensor. Main functions of the terminal device include collecting data (for some terminal devices), receiving control information and downlink data from a network device, sending an electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), a gNB in a 5G system, for example, an NR system, a transmission point (TRP or TP), one antenna panel or a group of antenna panels (including a plurality of antenna panels) of a base station in a 5G system, or a network node that constitutes a gNB or a transmission point, for example, a baseband unit (BBU) or a distributed unit (distributed unit, DU).

The network device and the terminal device may be deployed on the land, including an indoor device, an outdoor device, a hand-held device, or an in-vehicle device; may be deployed on the water; or may be deployed on an airplane, a balloon, and a satellite in the air. Scenarios in which the network device and the terminal device are located are not limited in embodiments of this application.

The relay device in embodiments of this application is a repeater (Repeater) that has a capability of receiving control information of the network device. The network device may further send control information to configure an on/off status, a beam direction, power control, an uplink/downlink slot configuration, an operating bandwidth, and the like of the repeater. In this case, the repeater may also be referred to as a network controlled repeater (Network controlled repeater, NCR) or a smart repeater (Smart repeater, SR).

The relay device may be a relay device in a form of the network device, or may be a relay device in a form of the terminal. The relay device in the form of the network device may be purchased, deployed, and installed by an operator, and is usually used to improve coverage of an entire area. Generally, a forwarding power and a forwarding gain are large, and generally needs to be installed by a professional, and an installation location needs to be determined based on a network planning result. The relay device in the form of the terminal may be purchased and installed by a consumer, and is usually used for coverage of a small area, for example, a home. Therefore, a transmit power and a noise coefficient of the relay device are strictly limited, to prevent large interference to an entire network. The NCR in this application may be an NCR (Network node NCR, NW-NCR) in a form of the network device, or may be an NCR (UE-NCR) in a form of the terminal.

FIG. 2 is a diagram of a structure of an NCR. The NCR includes a control signal receiving and processing module, a forwarding module, and an antenna. The control signal receiving and processing module is in a communication connection to the forwarding module. The forwarding module includes a radio frequency (radio frequency, RF) component (for example, a component performing a filtering operation) and a power amplifier (power amplifier, PA). When the NCR is in a downlink forwarding mode, an antenna on a network device side is connected to a downlink forwarding channel, and an antenna on a terminal device side is connected to the downlink forwarding channel, so that the NCR forwards downlink information from the network device to the terminal device. When the NCR is in an uplink forwarding mode, an antenna on a network device side is connected to an uplink forwarding channel, and an antenna on a terminal device side is connected to the uplink forwarding channel, so that the NCR forwards uplink information from the terminal device to the network device. The control signal receiving and processing module may receive a control signal sent by the network device, and adjust a parameter of the forwarding module through the connection to the forwarding module, for example, an antenna beam orientation, on/off of the forwarding module, and an amplification gain of the forwarding module. It should be understood that the forwarding module may also be described as a radio unit (radio unit, RU) or a forwarding unit, and the control signal receiving and processing module may also be described as a mobile terminal (mobile terminal, MT).

In embodiments of this application, the terminal device, the network device, or the relay device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux® operating system, a Unix® operating system, an Android® operating system, an iOS® operating system, or a Windows® operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD), and the like), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

It should be understood that, in FIG. 1, communication between the network device, the terminal device, and the relay device is used as an example to briefly describe a communication scenario to which this application can be applied, and do not impose a limitation on another scenario to which this application can be applied. It should be further understood that FIG. 1 is merely a simplified diagram of an example for ease of understanding. The communication system may further include another network device or may further include another terminal device, which is not shown in FIG. 1.

For ease of understanding of the technical solutions in embodiments of this application, some terms or concepts that are used in embodiments of this application are first briefly described.

1. A radio frequency (radio frequency, RF) repeater (RF repeater) is a device or an apparatus that has a radio frequency signal amplification and forwarding function, and may be configured to improve coverage of a wireless network. The RF repeater may also be referred to as an NR repeater in 5th generation (the fifth generation, 5G) mobile communication new radio (New radio, NR). Compared with a repeater that regenerates a signal for forwarding after demodulation and decoding, the RF repeater has the following advantages:

(1) The RF repeater only needs to forward a radio frequency signal and does not need to demodulate and decode a baseband signal. Therefore, a chip of the RF repeater has a low requirement on a baseband processing capability.
(2) The RF repeater is transparent to a transceiver device and has a low requirement on the transceiver device.
(3) After receiving a signal, the RF repeater amplifies and forwards the signal immediately, and no extra processing time is required. Therefore, an end-to-end delay is low.

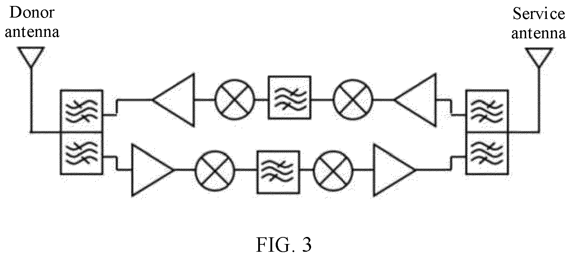

FIG. 3 is a diagram of a structure of an RF repeater. On one hand, the RF repeater may receive a downlink signal of a network device via a donor antenna (donor antenna), then perform operations such as filtering and amplification, and finally forward an amplified signal to a terminal device via a service antenna (service antenna). The donor antenna may also be referred to as a forward antenna, and the service antenna may also be referred to as a backward antenna, a retransmission antenna, or a coverage antenna. This mode may be referred to as a downlink forwarding mode. In the downlink forwarding mode, a channel between the donor antenna and the service antenna may also be referred to as a downlink forwarding channel.

On the other hand, the RF repeater may receive an uplink signal from a terminal device via a service antenna, then perform operations such as filtering and amplification, and finally forward an amplified signal to a network device via a donor antenna. This mode may be referred to as an uplink forwarding mode. In the uplink forwarding mode, a channel between the service antenna and the donor antenna may also be referred to as an uplink forwarding channel.

Optionally, the uplink forwarding channel and the downlink forwarding channel each may further include frequency mixers. As shown in FIG. 3, the uplink forwarding channel is used as an example. The RF repeater first down-converts a high-frequency signal to an intermediate frequency (or a baseband) via a frequency mixer, performs filtering on the intermediate frequency (or the baseband), then up-converts the signal to a high frequency via a frequency mixer, and then forwards the signal.

Optionally, the uplink forwarding channel each and the downlink forwarding channel each further include a power amplifier, for example, a low-noise amplifier (low-noise amplifier, LNA).

It should be noted that, in an uplink forwarding process, each component and channel included between the service antenna and the donor antenna may also be referred to as an uplink forwarding module or an uplink forwarding unit; and in a downlink forwarding process, each component and channel included between the donor antenna and the service antenna may also be referred to as a downlink forwarding module or a downlink forwarding unit.

2. A random access process starts when a terminal device sends a random access preamble (preamble) to attempt to access a network and ends before a basic signaling connection is established between the terminal device and the network.

In the random access process, the terminal device needs to perform RACH resource selection. The terminal device may select, based on a selected synchronization signal (Synchronization signal, SS) physical broadcast channel (Physical broadcast channel, PBCH) block (SS/PBCH block, SSB) and a mapping relationship between the SSB and an RO, an RO to send a preamble; and/or the terminal device may select, based on a selected SSB and a mapping relationship between the SSB and a preamble, a to-be-sent preamble.

For example, one SSB may correspond to a plurality of ROs, or a plurality of SSBs are mapped to one RO. When the plurality of SSBs are mapped to the RO, different SSBs are further mapped to different preambles.

Generally, the SSB selected by the terminal device is an SSB that is received by the terminal device and whose RSRP is greater than a threshold, or an SSB whose RSRP is higher or highest.

3. Precoding matrix indicator (precoding matrix indicator, PMI)

The PMI may be used to indicate a precoding matrix. The precoding matrix may be, for example, a precoding matrix determined by a terminal device based on a channel matrix from one or more antenna ports of a network device to one or more antenna ports of the terminal device. Specifically, the precoding matrix may be determined by the terminal device in a manner, for example, channel estimation. For example, a channel coefficient matrix is determined by measuring a reference signal, and singular value decomposition is further performed on the matrix to determine the precoding matrix. Finally, a precoding matrix closest to the precoding matrix determined through singular value decomposition is selected from a codebook configured by a base station, and an index of the precoding matrix in the codebook is reported. It should be understood that a specific method for determining the precoding matrix by the terminal device is not limited to the foregoing descriptions. For a specific implementation, refer to a conventional technology. For brevity, implementations are not enumerated herein.

The precoding matrix determined by the terminal device may be referred to as a to-be-fed-back precoding matrix, or a to-be-reported precoding matrix. The terminal device may indicate the to-be-fed-back precoding matrix through the PMI, so that the network device restores the precoding matrix based on the PMI. The precoding matrix restored by the network device based on the PMI may be the same as or similar to the to-be-fed-back precoding matrix.

It should be understood that the PMI is merely a name, and should not constitute any limitation on this application. This application does not exclude a possibility of defining signaling with another name for a same or similar function in a future protocol.

4. Reference signal (reference signal, RS)

The RS may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS) used for downlink channel measurement, or may be a sounding reference signal (sounding reference signal, SRS) used for uplink channel measurement. It should be understood that the foregoing listed reference signals are merely examples, and should not constitute any limitation on this application. This application does not exclude a possibility of defining another reference signal to implement a same or similar function in a future protocol.

In addition, it should be noted that because there is usually a correspondence between a reference signal and a reference signal resource, and one reference signal corresponds to one reference signal resource. In the following description of "sending a reference signal or receiving a reference signal", the reference signal and the reference signal resource cannot be used in a substitute manner, and the reference signal and the reference signal resource in other descriptions may be used in a substitute manner. For example, that configuration information includes a reference signal may be described as that the configuration information includes a reference signal resource. For another example, an indication of the reference signal may be described as an indication of the reference signal resource.

5. Antenna port (port): In 4G and 5G systems, different signals transmitted on a same antenna port experience a same channel environment, and each antenna port corresponds to a resource raster. There is a correspondence between the antenna port and a physical channel or a signal. Further, the antenna port may be understood as a virtual antenna identified by a receiving device. In other words, the antenna port is a logical concept, and may correspond to one or more physical antennas (including a physical antenna element). When one antenna port corresponds to a plurality of physical antennas, the plurality of physical antennas may form one antenna port in a precoding manner. In addition, the plurality of physical antennas may further form a plurality of antenna ports in a plurality of precoding manners. A specific mapping form between the physical antenna and the antenna port is not limited in this application.

Generally, to measure a channel coefficient or a channel coefficient matrix between each antenna port and the receiving device, a quantity of ports used for measuring a reference signal generally corresponds to a quantity of to-be-measured antenna ports. Specifically, the quantity of ports used for measuring the reference signal is equal to the quantity of antenna ports, so that when receiving the reference signal, the receive end has a sufficient degree of freedom to measure and estimate a channel between the receive end and each antenna port.

6. Time division multiplexing (Time division multiplexing, TDM) port: One reference signal occupies a plurality of time units, for example, one reference signal occupies a plurality of OFDM symbols.

7. A time unit may be understood as a unit of a time domain resource. Specifically, the time unit may be represented as a symbol (symbol), a slot (slot), a mini-slot (mini-slot), a partial slot (partial slot), a subframe (subframe), a radio frame (frame), a sensing slot (sensing slot), or the like.

In the communication scenario shown in FIG. 1, the network device needs to control a beam, on/off, and the like of an NCR based on a status of a terminal device served by the NCR. For example, when there is no terminal device that needs to be served in coverage of the NCR, the network device may control the NCR to turn off a forwarding channel. For another example, on a high frequency, the network device may control the beam of the NCR based on a location of the terminal device served by the NCR, so that the beam of the NCR is aligned with the terminal device, thereby increasing signal strength of the terminal device. Therefore, when there are a plurality of NCRs under one network device, the network device first needs to determine an association relationship between a terminal device and the NCR, that is, which NCR covers a terminal device.

A manner of determining the association relationship between the terminal device and the NCR is as follows: When there are NCRs in a plurality of forms of the network device (Network node NCR, NW-NCR) in coverage of the network device, these NW-NCRs are usually located in different areas, and coverage areas do not overlap. Therefore, the network device may allocate dedicated SSBs to these NW-NCRs, and SSB indexes allocated to different NW-NCRs are different. When sending these SSBs, the network device aligns a transmit beam with a corresponding NW-NCR (other NW-NCRs cannot receive these SSBs, or energy/power of the received SSBs is very low). Therefore, an SSB received by the terminal device in coverage of the NW-NCR, for example, user equipment (User equipment, UE) is also an SSB forwarded by an NW-NCR (that is, an NW-NCR covering the UE) serving the terminal device, so that the UE performs uplink access on a random access channel (Random access channel, RACH) opportunity (RACH occasion, RO) corresponding to the SSB received by the UE. Because there is a determined mapping relationship between the SSB and the RO, the network device can determine, based on the RO used by the UE to initiate uplink access, the SSB received by the UE, and then determine, based on a correspondence between the SSB and the NCR, the NCR covering the UE.

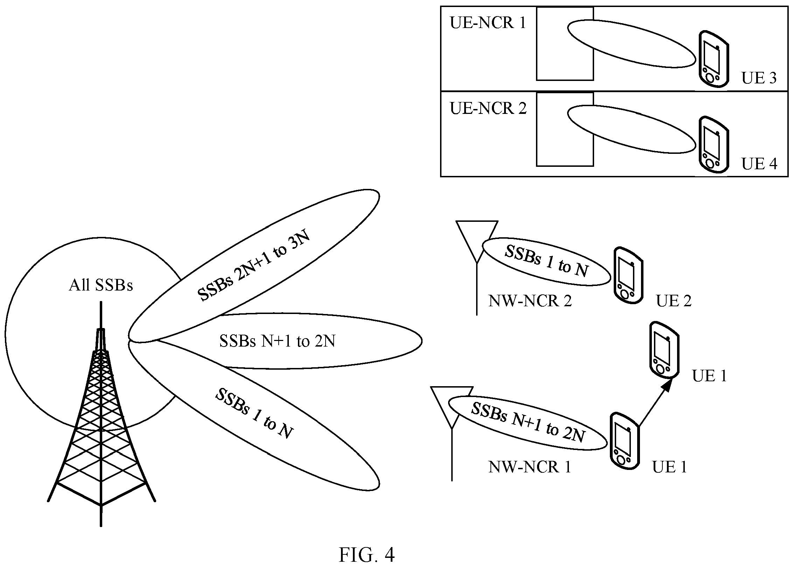

For ease of understanding, the manner of determining the association relationship between the terminal device and the NCR is briefly described with reference to FIG. 4. It can be learned from FIG. 4 that all SSBs allocated by the network device include SSBs 1 to N, SSBs N+1 to 2N, and SSBs 2N+1 to 3N shown in FIG. 4. There are NCRs in a plurality of forms of the network device (for example, an NW-NCR 1 and an NW-NCR 2 shown in FIG. 4) in coverage of the network device, the network device may allocate dedicated SSBs (for example, SSBs 1 to N) to the NW-NCR 1, and allocate dedicated SSBs (for example, SSBs N+1 to 2N) to the NW-NCR 2.

Specifically, when sending the SSBs 1 to N, the network device aligns a transmit beam with the corresponding NW-NCR 1; and when sending the SSBs N+1 to 2N, the network device aligns a transmit beam with the corresponding NW-NCR 2. Therefore, SSBs 1 to N received by UE 1 in coverage of the NW-NCR 1 are also SSBs 1 to N forwarded by the NW-NCR 1 serving the UE 1. Therefore, the UE 1 performs uplink access on an RO corresponding to the SSBs 1 to N received by the UE 1. Because there is a determined mapping relationship between the SSBs 1 to N and the RO, the network device can determine, based on the RO used by the UE 1 to initiate uplink access, that an SSB received by the UE 1 is one of the SSBs 1 to N, and then determines the NW-NCR 1 that covers the UE 1 based on a correspondence between the SSB 1 to N and the NCR; and similarly, determines the NW-NCR 2 that covers UE 2 based on a correspondence between the SSBs N+1 to 2N and the NW-NCR 2.

The manner of determining the association relationship between the terminal device and the NCR has the following disadvantages:

(1) For a UE-NCR (for example, the UE-NCR 1 and the UE-NCR 2 shown in FIG. 4), it is unlikely that the network device allocates a dedicated SSB index to each UE-NCR, because SSBs with different indexes need to occupy different time-frequency resources and use different beams. Generally, there are a large quantity of UE-NCRs (for example, there are a plurality of consumers in a building and UE-NCRs are installed). If the dedicated SSB index is allocated to each UE-NCR, large resource overheads are caused to the network device. Therefore, the network device uses SSBs with a same index to cover UE-NCRs in a same area. In this case, UEs covered by the UE-NCRs in the same area may use a same RO to initiate uplink access. Therefore, the network device cannot further distinguish an association relationship between the UE and the UE-NCR.

(2) After the UE moves, an association relationship between the UE and the NCR may change. For example, the UE moves from coverage of one NCR to coverage of another NCR (as shown in FIG. 4, the UE 1 moves from coverage of the NW-NCR 1 to coverage of the NW-NCR 2). If the UE does not initiate new random access, the network device cannot obtain an updated association relationship between the UE and the NCR.

Another manner of determining the association relationship between the terminal device and the NCR is as follows: When there are N NCRs in coverage of the network device, the network device allocates N reference signals to the UE. In a time unit corresponding to each reference signal, a base station controls only one of these NCRs to turn on a forwarding channel and controls the other NCRs to turn off forwarding channels. NCRs that turn on forwarding channels in time units corresponding to different reference signals are different. The UE reports a reference signal identifier and a corresponding reference signal power. The network device may determine, based on a reference signal, with a maximum power, reported by the UE, an NCR associated with the UE.

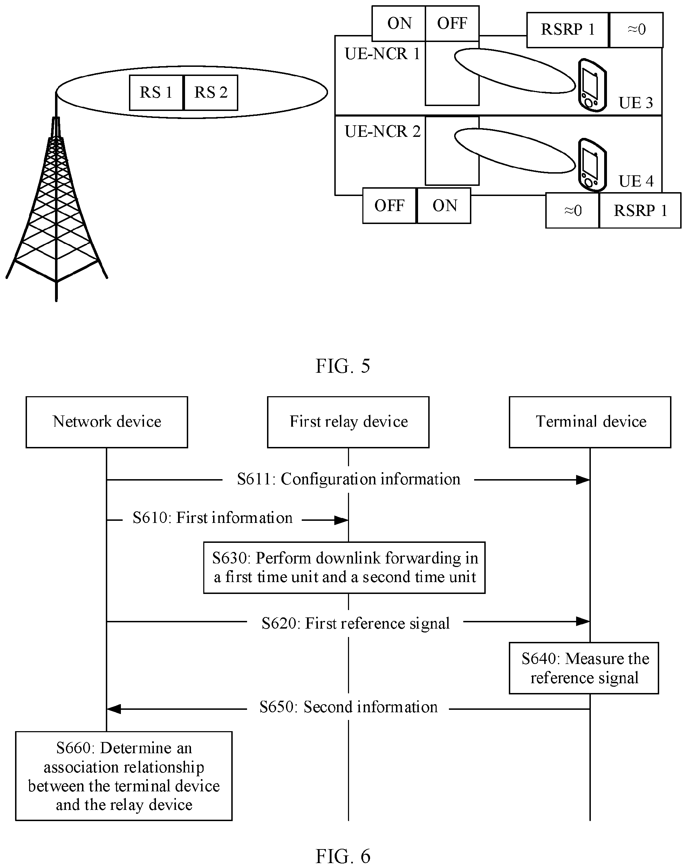

For ease of understanding, the manner of determining the association relationship between the terminal device and the NCR is briefly described with reference to FIG. 5. It can be learned from FIG. 5 that there are two NCRs, namely, a UE-NCR 1 and a UE-NCR 2, shown in FIG. 5 in coverage of the network device, and a base station allocates two reference signals, namely, an RS 1 and an RS 2, shown in FIG. 5 to the UE. In a time unit #1 corresponding to the RS 1, the base station controls the UE-NCR 1 to turn on a forwarding channel and controls the UE-NCR 2 to turn off a forwarding channel. In a time unit #2 corresponding to the RS 2, the base station controls the UE-NCR 2 to turn on a forwarding channel and controls the UE-NCR 1 to turn off a forwarding channel. UE 3 reports an identifier of the RS 1 and an RSRP 1, so that the network device may determine the UE-NCR 1 associated with the UE 3. Similarly, the UE-NCR 2 associated with UE 4 is determined based on an identifier of the RS 2 and an RSRP 2 that are reported by the UE 4.

Alternatively, UE 3 separately reports identifiers of the RS 1 and the RS 2 and corresponding RSRPs. Because the UE 3 is located in coverage of the UE-NCR 1, an RSRP corresponding to the RS 1 is greater than an RSRP of the RS 2. Therefore, the base station can determine that the UE 3 is located in coverage of the UE-NCR 1. Similarly, the base station can also determine that UE 4 is located in coverage of the UE-NCR 2.

However, the manner of determining the association relationship between the terminal device and the NCR has a disadvantage of high reference signal resource overheads, because a quantity of reference signals needs to be in direct proportion to a quantity of NCRs.

To avoid a problem in the foregoing manner of determining the association relationship between the terminal device and the NCR, this application provides a communication method, to determine the association relationship between the terminal device and the NCR while reducing resource overheads.

A specific structure of an execution body of a method provided in embodiments of this application is not particularly limited in following embodiments provided that a program that records code of the method provided in embodiments of this application can be run to perform communication according to the method provided in embodiments of this application. For example, the execution body of the method provided in embodiments of this application may be the terminal device or the access network device, or a functional module that can invoke and execute the program in the terminal device or the access network device.

In addition, to facilitate understanding of embodiments of this application, the following several descriptions are provided.

First, in this application, "being used to indicate" may include "being used to directly indicate" and "being used to indirectly indicate". When a piece of indication information is described as being used to indicate A, the indication information may be used to directly indicate A or used to indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

Second, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "610" are merely identifiers for ease of description, and do not limit a sequence of performing steps.

Third, in this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

Fourth, "being stored" in embodiments of this application may be "being stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the "protocol" in embodiments of this application may refer to standard protocols in the communication field, for example, may include an LTE protocol, an NR protocol, and a related protocol applied to a future communication system. This is not limited in this application.

Sixth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

Seventh, in embodiments of this application, "of (of)", "corresponding (corresponding, relevant)", "corresponding (corresponding)", and "associate (associate)" may be interchangeably used sometime. It should be noted that, when a difference between the terms is not emphasized, meanings to be expressed are consistent.

Without loss of generality, interaction between the network device, the terminal device, and the relay device is used as an example below to describe in detail the communication method provided in embodiments of this application.

FIG. 6 is a schematic flowchart of a communication method according to an embodiment of this application. The following steps are included.

S611: A network device sends configuration information to a terminal device, or the terminal device receives the configuration information from the network device.

In this embodiment, that the network device configures the terminal device to measure a reference signal includes the following two implementations:

Implementation #1: The network device indicates, based on the configuration information, the terminal device to report a phase difference corresponding to the reference signal.

In this implementation #1, the network device sends first configuration information to the terminal device, where the first configuration information indicates the following measurement-related configuration to the terminal device:

measuring M reference signals, and reporting information about K phase differences. K is less than or equal to M, and K and M are positive integers.

It should be understood that "information about XX" in this application represents information indicating "XX", and may also be referred to as "indication information".

tion of XX". For example, the "information about a phase difference" may be referred to as "indication information of the phase difference". In other words, "information" and "indication information" in this application represent a same meaning, and may be used interchangeably.

Optionally, there are at least two ports for each of the M reference signals, and each reference signal includes at least two consecutive time units. For example, each reference signal occupies at least two consecutive symbols in one slot. In this case, it may also be understood that each reference signal includes at least two TDM ports.

Optionally, the K phase differences respectively correspond to K reference signals or K reference signal resources. During reporting, the terminal device may report indications (CSI-RS resource indicator, CRI) of the K reference signal resources and the K phase differences respectively corresponding to the K reference signal resources.

Optionally, the first configuration information may further include information about a positive integer N', and the positive integer N' indicates that the K phase differences reported by the terminal device are K phases in $0, \frac{2\pi}{N'}, \frac{4\pi}{N'}, ..., \frac{2(N'-1)\pi}{N'}$. It may be understood that the network device indicates a second phase set based on the information about a positive integer N':

$$\left\{0, \frac{2\pi}{N'}, \frac{4\pi}{N'}, ..., \frac{2(N'-1)\pi}{N'}\right\}.$$

Optionally, the first configuration information may further include information about M positive integers, for example, $N'_0, N'_1, ..., N'_m, ...,$ and $N'_M$, where the positive integer $N'_m$ corresponds to a reference signal m, that is, reference signals may respectively correspond to different second phase sets.

For example, a second phase set corresponding to the reference signal m is $\{0, \frac{2\pi}{N'_m}, \frac{4\pi}{N'_m}, ..., \frac{2(N'_m-1)\pi}{N'_m}\}$. When reporting a phase difference corresponding to the reference signal m, the terminal device determines a phase difference from the second phase set $\{0, \frac{2\pi}{N'_m}, \frac{4\pi}{N'_m}, ..., \frac{2(N'_m-1)\pi}{N'_m}\}$ corresponding to the reference signal m for reporting.

One reference signal may correspond to a group of relay devices. To be specific, the network device may determine an association relationship between the terminal device and a plurality of relay devices in the group based on a phase difference or a PMI reported by the terminal device. For example, the network device may determine that a relay device, in the plurality of relay devices, whose configured phase is close to the phase difference reported by the terminal device is a relay device associated with the terminal device. For details about information about the configured phase of the relay device, refer to step S610 below. Details are not described herein. Therefore, the network device may determine, based on a quantity of relay devices that may be associated with the terminal device, a quantity of phases included in the second phase set.

Further, the network device may further group the relay devices associated with the terminal device, to obtain a plurality of groups of relay devices. The following describes in detail how the network device groups the relay devices. Details are not described herein.

Optionally, when the relay device groups correspond to different quantities of relay devices, the network device may configure different second phase sets for different reference signals in the foregoing manner. The different reference signals may correspond to different relay device groups. For specific details, refer to the following descriptions.

For example, the first configuration information includes channel state information reporting configuration (Channel state information report configuration, CSI-reportConfig) information sent by the network device to the UE, and the CSI-reportConfig information may include but is not limited to the following information:

(1) Channel measurement resource configuration information. For example, CSI-reportConfig includes a channel measurement resource configuration identifier (identify, ID), and the channel measurement resource configuration ID is an ID of a channel measurement resource configuration. Before step S611, the network device may send, to the terminal device, channel measurement resource configuration information corresponding to the channel measurement resource configuration ID.

Further, the resource configuration may include one or more reference signal resource lists, each reference signal resource list includes one or more reference signal resource sets, and each reference signal resource set includes an ID of one or more reference signal resources.

Before step S611, the network device sends, to the terminal device, reference signal resource configuration information corresponding to the ID of the one or more reference signal resources. The reference signal resource configuration information may be specifically used to configure information such as a time-frequency location, a sequence generation manner, and a quantity of ports for each reference signal resource.

Optionally, the channel measurement resource configuration information in this embodiment includes M reference signals or M reference signal resources in total.

Optionally, the M reference signals may be non-zero power state information reference signals (None zero power channel state information reference signal, NZP-CSI-RS).

(2) Report quantity configuration information.

The information is, for example, information indicating that a phase difference is reported.

Optionally, the report quantity configuration information includes indication information of a positive integer N', and the phase difference reported by the terminal device is a phase difference in 0, $\frac{2\pi}{N'}, \frac{4\pi}{N'}, ..., \frac{2(N'-1)\pi}{N'}$. The positive integer N' indicates a second phase set, and the phase difference reported by the terminal device is one phase in the second phase set.

Optionally, the report quantity configuration information may include indication information of M positive integers, for example, $N'_0$, $N'_1$, ..., $N'_m$, ..., and $N'_M$, where the positive integer $N'_m$ corresponds to a reference signal m. In this case, reference signals may respectively correspond to different second phase sets.

For a reference signal m, the terminal device reports a phase difference in a second phase set corresponding to the reference signal m. For example, the second phase set corresponding to the reference signal m is $\left\{0, \frac{2\pi}{N'_m}, \frac{4\pi}{N'_m}, ..., \frac{2(N'_m-1)\pi}{N'_m}\right\}$. When reporting the phase difference corresponding to the reference signal m, the terminal device determines a phase difference from the second phase set $\left\{0, \frac{2\pi}{N'_m}, \frac{4\pi}{N'_m}, ..., \frac{2(N'_m-1)\pi}{N'_m}\right\}$ for reporting.

Optionally, the CSI-reportConfig information may further include information about a report quantity K, and the information indicates the terminal device to report phase differences corresponding to the K reference signals.

When the CSI-reportConfig information includes both M and K, the terminal device reports CRIs of the K reference signal resources in the M reference signal resources and K phase differences corresponding to the K reference signal resources. For how the terminal device determines a CRI corresponding to a reference signal resource, refer to descriptions in a current protocol (for example, 3GPP TS 3821 2). Details are not described herein again.

Implementation #2: The network device indicates, based on the configuration information, the terminal device to report a PMI corresponding to the reference signal.

In this implementation #2, the network device sends second configuration information to the terminal device, where the second configuration information indicates the following measurement-related configuration to the terminal device:
measuring M reference signals, and reporting information about K PMIs, where K is less than or equal to M, and K and M are positive integers.

Optionally, there are at least four ports for each of the M reference signals, and each reference signal includes at least two consecutive time units. For example, each reference signal occupies at least two consecutive symbols in one slot. It may also be understood that each reference signal includes at least two TDM ports.

For example, one of the M reference signals is a reference signal that has four ports and frequency domain code division multiplexing (frequency domain code division multiplexing, fd-CDM) 2. It indicates that the reference signal occupies two consecutive symbols and two consecutive subcarriers in one resource block. The fd-CDM 2 indicates that the terminal device expects the two antenna ports of the network device to implement code division multiplexing of the two antenna ports on two REs on two carriers in frequency domain and one symbol in time domain. Specifically, the two antenna ports send reference signals on the two REs in an orthogonal code manner.

It should be understood that, in the implementation #2, a manner in which the second configuration information sent by the network device to the terminal device is used to configure the M reference signals is similar to the manner about the first configuration information in the foregoing implementation #1. For example, the second configuration information includes CSI-reportConfig information sent by the network device to the UE, and the CSI-reportConfig information includes channel measurement resource configuration information, report quantity configuration information, and information about a report quantity K. A difference lies in that the report quantity configuration information indicates information about a reported PMI, instead of information about the phase difference, in this implementation.

For example, the network device may further send antenna configuration information: a single antenna panel (panel) to the terminal device, where an antenna dimension is N1=2 and N2=1.

For example, the network device may indicate, to the terminal device, that a rank of a precoding matrix reported by the terminal device is limited to 1.

For example, the network device may indicate, to the terminal device, to report the precoding matrix based on a codebook mode 1 (codebookMode=1) in a type 1 single-panel codebook (Type I Single-Panel Codebook).

It should be understood that the foregoing configuration about PMI reporting is merely an example, and does not constitute any limitation on the protection scope of this application. For specific parameter explanations and descriptions of PMI reporting, refer to related descriptions in an existing protocol (for example, 3GPP TS 38.214 (R16)). Details are not described in this application again.

Optionally, the network device may send the configuration information to a plurality of terminal devices, to schedule the plurality of terminal devices to report phase differences or PMIs, so as to determine association relationships between the relay device and the plurality of terminal devices. Reference signals measured by the plurality of terminal devices may be the same or may be different. For example, the network device simultaneously sends the configuration information to the plurality of terminal devices through multicast. For another example, the network device sends the configuration information to each terminal device.

It should be understood that, in this embodiment, to enable the network device to determine the association relationship between the relay device and the terminal device, in addition to performing related configuration (for example, step S611 above) for the terminal device, the network device further needs to perform corresponding configuration on the relay device before sending the reference signal, so that the relay device performs downlink forwarding based on the configuration.

For ease of description, an example in which the network device is a relay device (for example, a first relay device, where the first relay device is any one of the plurality of relay devices in coverage of the network device) is first used for description. The method procedure shown in FIG. 6 further includes the following step.

S610: The network device sends first information to the first relay device, or the first relay device receives the first information from the network device.

The first relay device may be the NW-NCR or the UE-NCR described above, or may be another device configured to forward information between the network device and the terminal device. A specific form of the relay device is not limited in this embodiment, and all devices that can perform downlink forwarding based on the first information fall within the protection scope of this application.

Specifically, the first information indicates a first time unit, a second time unit, and a first phase. In this embodiment, if the network device configures (or indicates) a phase for a relay device, it indicates that the relay device needs to consider the configured phase when performing downlink forwarding. How the relay device performs downlink forwarding based on the configured phase is described below with reference to step S630. Details are not described herein again.

For example, the first information includes information indicating the first time unit and the second time unit, and information indicating the first phase.

For example, the first information includes information #1 and information #2, where the information #1 indicates the first time unit and the second time unit, and the information #2 indicates the first phase.

Specifically, the first information indicates the first relay device to perform downlink forwarding in the first time unit and the second time unit, and indicates that the second time unit is superimposed with the first phase compared with the first time unit when the first relay device performs downlink forwarding.

For ease of understanding, the following briefly describes a possible form of the first information in this embodiment.

It can be learned from the foregoing that the first information may indicate the first time unit, the second time unit, and the first phase. For ease of description, the first information is divided into two parts for description: One part is the information indicating the first time unit and the second time unit (referred to as time unit indication information below), and the other part is the information indicating the first phase (referred to as phase indication information below).

Optionally, the first time unit and the second time unit in this embodiment are two symbols occupied by one reference signal corresponding to the first relay device, and the time unit indication information indicates the two symbols. The reference signal corresponding to the first relay device may be one of the M reference signals in step S611. In this embodiment, different relay devices may correspond to a same reference signal, or may correspond to different reference signals.

For example, the reference signal corresponding to the first relay device is a reference signal including at least two consecutive time units. For example, the two time units occupied by the reference signal are respectively a symbol #1 and a symbol #2, and the time unit indication information indicates the symbol #1 and the symbol #2. The first time unit may correspond to the symbol #1, and the second time unit may correspond to the symbol #2; or the first time unit may correspond to the symbol #2, and the second time unit may correspond to the symbol #1. The time unit indication information includes but is not limited to: an identifier of the symbol #1, an identifier of the symbol #2, time domain location information of the symbol #1, and time domain location information of the symbol #2.

Optionally, when the reference signal corresponding to the first relay device is a periodic reference signal, the first time unit and the second time unit may also be periodic time units. For example, when a period of one reference signal is one slot, the reference signal occupies a symbol #1 and a symbol #2 in one slot. In this case, the reference signal occupies a symbol #1 and a symbol #2 in a slot 1, a symbol #1 and a symbol #2 in a slot 2, a symbol #1 and a symbol #2 in a slot 3, and the like. The first time unit may correspond to the symbol #1 in the slot 1, the symbol #1 in the slot 2, and the symbol #1 in the slot 3, and the second time unit may correspond to the symbol #2 in the slot 1, the symbol #2 in the slot 2, and the symbol #2 in the slot 3; or the first time unit may correspond to the symbol #2 in the slot 1, the symbol #2 in the slot 2, and the symbol #2 in the slot 3, and the second time unit may correspond to the symbol #1 in the slot 1, the symbol #1 in the slot 2, and the symbol #1 in the slot 3. It should be noted that the foregoing merely describes how the time unit indication information indicates the time unit occupied by the reference signal, and does not constitute any limitation on the protection scope of this application. The time unit occupied by the reference signal may be indicated in another manner, for example, indicated based on an identifier of a reference signal. Time units occupied by different reference signals are different, a correspondence between a reference signal and a time unit occupied by the reference signal is preset, and the network device may indicate, based on the identifier of the reference signal, the time unit corresponding to the reference signal. Other indication manners may also be used. Examples are not described herein again.

In a possible implementation, that the phase indication information indicates a first phase includes: The phase indication information directly indicates the first phase.

For example, the phase indication information is information about the first phase. The phase indication information includes but is not limited to a value of the first phase. For example, the first phase is $\frac{\pi}{2}$, and the phase indication information is $\frac{\pi}{2}$.

In another possible implementation, the first phase is one phase in a first phase set, the first phase set includes N phases, and N is a positive integer. That the phase indication information indicates a first phase includes: The phase indication information indirectly indicates the first phase.

In this implementation, the following several possibilities are included.

Possibility 1:

The network device sends third information to the first relay device, where the third information indicates the first phase set. The phase indication information includes information about a first index, and the first index indicates an index (or a location) of the first phase in the first phase set.

For example, a quantity of pieces of third information sent by the network device to the first relay device is N, and the quantity N is used to determine the first phase set as follows:

$$\left\{0, \frac{2\pi}{N}, \frac{4\pi}{N}, \dots, \frac{2(N-1)\pi}{N}\right\},$$

where
indexes of phases in the first phase set are "0, 1, 2, ..., N-1".

In step S611, the network device indicates the positive integer N' to the terminal device, to indicate a second phase set.

In a possible implementation, in step S611, the first configuration information indicates the positive integer N' to the terminal device. In this implementation, the network device may configure, for the first relay device, a positive integer that is the same as that of the terminal device. This may be understood as that the network device indicates a same phase set to the terminal device and the relay device. In other words, the first phase set and the second phase set are a same phase set, and N' is equal to N.

In addition, in this implementation, the network device may also configure, for the first relay device, a positive integer different from that of the terminal device. This may be understood as that the network device indicates different phase sets to the terminal device and the relay device. In other words, the first phase set and the second phase set are not a same phase set, and N' is not equal to N. For example, N' configured by the network device for the terminal device is a multiple of N configured for the first relay device. In this case, the terminal device is allowed to perform oversampling reporting, and reporting precision is higher.

In another possible implementation, in step S611, the first configuration information indicates the M positive integers to the terminal device.

(for example, $N'_0$, $N'_1$, ..., $N'_m$, ..., $N'_M$). In this implementation, the network device determines, based on a reference signal corresponding to the first relay device, a value of the phase N' included in the second phase set. For example, if the reference signal corresponding to the first relay device is m, the phase N' included in the second phase set is $N'_m$.

In this implementation, the network device may configure, for the first relay device, a positive integer that is the same as that of the terminal device. This may be understood as that the network device indicates a same phase set to the terminal device and the relay device. In other words, the first phase set and the second phase set are a same phase set, and $N'_m$ is equal to N.

In addition, in this implementation, the network device may also configure, for the first relay device, a positive integer different from that of the terminal device. This may be understood as that the network device indicates different phase sets to the terminal device and the relay device. In other words, the first phase set and the second phase set are not a same phase set, and $N'_m$ is not equal to N. For example, $N'_m$ configured by the network device for the terminal device is a multiple of N configured for the first relay device. In this case, the terminal device is allowed to perform oversampling reporting, and reporting precision is higher.

The phase indication information sent by the network device to the first relay device includes indication information of an integer n, and the integer n indicates that an index of the first phase in the phase set is n. For example, if n is 1, the first phase is $\varphi = \dfrac{2\pi}{N}$. n is greater than or equal to 0 and less than or equal to N-1.

It may be understood that, when n is 0, it indicates that the index of the first phase in the first phase set is an index of a $1^{st}$ phase; when n is 1, it indicates that the index of the first phase in the first phase set is an index of a $2^{nd}$ phase, and by analogy. Different values of n indicate that indexes of the first phase in the first phase set are different, and obtained values of the first phase are also different.

Possibility 2:

That a network device sends first information to a first relay device may be that the network device sends first multicast information to the first relay device, where the first multicast information includes the first information.

Specifically, the first multicast information includes information about a plurality of indexes, an index of the first phase in the first phase set is a first index, and the first index is one of the plurality of indexes.

For example, in the possibility 2, to enable the first relay device to determine, based on the received first multicast information, the first phase configured by the network device for the first relay device, the network device further needs to send first location information to the first relay device, where the first location information indicates a location of the first index in the plurality of indexes.

It should be understood that the first location information may be configured in advance (for example, sent before the first multicast information is sent), may be sent together with the first multicast information, or may be sent after the first multicast information. This is not limited in embodiments.

For example, a quantity of pieces of third information sent by the network device to the first relay device is N, and the quantity N is used to determine the first phase set as follows:

$$\left\{0, \frac{2\pi}{N}, \frac{4\pi}{N}, ..., \frac{2(N-1)\pi}{N}\right\},$$

where

indexes of phases in the first phase set are "0, 1, 2, ..., N-1".

The first multicast information sent by the network device to the first relay device includes indication information of a plurality of indexes, and the plurality of indexes are "0, 1, 2, ..., N-1".

It should be noted that indexes in the plurality of indexes may be sorted in ascending order, or may be sorted in descending order, or may be sorted out of order. A specific sorting order is determined according to an implementation algorithm of the network device. This is not limited in embodiments of this application.

Optionally, before (or at the same time) the network device sends the first multicast information to the first relay device, the network device sends, to the first relay device, indication information indicating that the second location information is an integer n2, where the integer n2 indicates that the first index in the plurality of indexes is n2. The first relay device may determine a first phase index based on the indication information of n2, as described above, and then determine the first phase from the first phase set based on the first phase index. For example, when n2 is 0, it indicates that the first phase index is a $1^{st}$ phase index in the plurality of indexes.

Possibility 3:

That a network device sends first information to a first relay device may be that the network device sends second multicast information to the first relay device, where the second multicast information includes the first information.

Specifically, the second multicast information includes indication information of a plurality of phases, and the first phase configured by the network device for the first relay device is one of the plurality of phases.

For example, in the possibility 3, to enable the first relay device to determine, based on the received second multicast information, the first phase configured by the network device for the first relay device, the network device further needs to send second location information to the first relay device, where the second location information indicates a location of the first phase in the plurality of phases indicated by the second multicast information.

It should be understood that the second location information may be configured in advance (for example, sent before the second multicast information is sent), may be sent together with the second multicast information, or may be sent after the second multicast information. This is not limited in embodiments.

In a possible implementation, the location information directly indicates the location of the first phase in the plurality of phases.

For example, the second multicast information sent by the network device to the first relay device includes N phases. For example,

$$\left\{0, \ \frac{2\pi}{N}, \frac{4\pi}{N}, \dots, \frac{2(N-1)\pi}{N}\right\}.$$

It should be noted that phases in the plurality of phases may be sorted in ascending order, or may be sorted in descending order, or may be sorted out of order. A specific sorting order is determined according to an implementation algorithm of the network device. This is not limited in embodiments of this application.

Optionally, before (or at the same time or after) the network device sends the second multicast information to the first relay device, the network device sends, to the first relay device, indication information indicating that the location information is an integer n1, where the integer n1 indicates that a location of the first phase in the plurality of phases is an $(n1)^{th}$ phase or an $(n1+1)^{th}$ phase. For example, when n1 is 1, it indicates that the first phase is a $1^{st}$ phase or a $2^{nd}$ phase in the plurality of phases.

The integer n1 may also be understood as a group member identifier of the first relay device. For example, the first relay device is a relay device in a relay device group, the network device allocates a group identifier to the group of relay devices, and allocates a group member identifier n1 to each relay device in the group of relay devices. The time unit indication information sent by the network device is associated with the group identifier, and is used by the group of relay devices to determine time units. To be specific, each relay device in the group of relay devices determines a same first time unit and a same second time unit. The second multicast information sent by the network device includes a plurality of phases, and each relay device determines, based on the group member identifier n1 of the relay device, a phase corresponding to the relay device.

It should be understood that the information indicating the phase set in the foregoing possibility 1 to possibility 3 may be alternatively preconfigured or configured by default. The foregoing indication performed by the network device based on the third information is merely an example, and does not constitute any limitation on the protection scope of this application.

It should be further understood that a specific representation form of the first information is not limited in this embodiment. The foregoing description of the possible form of the first information is merely an example, and does not constitute any limitation on the protection scope of this application. Other information that can indicate the first time unit, the second time unit, and the first phase also falls within the protection scope of this application.

Specifically, the first relay device is any one of the plurality of relay devices in coverage of the network device. In this embodiment, the network device may separately send indication information to all relay devices in coverage. The indication information received by each relay device indicates a time unit (for example, the first time unit and the second time unit indicated by the first information) in which the relay device performs downlink forwarding, and the indication information further indicates a phase (for example, the first phase indicated by the first information) configured for the relay device.

For example, a relay device #1, a relay device #2, and a relay device #3 are in coverage of the network device, and the network device separately sends indication information #1 to the relay device #1, sends indication information #2 to the relay device #2, and sends indication information #3 to the relay device #3. The indication information #1 indicates a time unit in which the relay device #1 performs downlink forwarding and a phase #1 corresponding to the relay device #1. The indication information #2 indicates a time unit in which the relay device #2 performs downlink forwarding and a phase #2 corresponding to the relay device #2. The indication information #3 indicates a time unit in which the relay device #3 performs downlink forwarding and a phase #3 corresponding to the relay device #3.

Optionally, when the first relay device belongs to a relay device group, the network device may multicast the indication information to a relay device that belongs to the relay device group.

Further, when the network device groups the plurality of relay devices in coverage into at least one relay device group, the network device may allocate a corresponding group identifier to each relay device group, and configure a group member identifier for each relay device in the relay device group.

For example, if the relay device #1, the relay device #2, and the relay device #3 in the foregoing example are three relay devices in a relay device group #1, the indication information #1, the indication information #2, and the indication information #3 are a same multicast message that is broadcast by the network device.

In a possible implementation, the multicast message includes the following information:

time unit indication information and information about an index set, where the time unit indication information is associated with a group identifier, and indicates a time unit corresponding to a relay device in the relay device group, and the index set includes indexes corresponding to different phases.

For example, the multicast message includes indication information of two symbols occupied by a reference signal #1, and the reference signal #1 corresponds to the relay device group #1.

The multicast message further includes indication information of the index set. For example, the index set is {2, 1, 0}. In addition, the network device may further send indication information of a phase set to the relay device group. For example, if the information of the phase set includes indication information of N=3 the information about the phase set indicates that the phase set is:

$$\left\{0, \frac{2\pi}{3}, \frac{4\pi}{3}\right\}.$$

The phase set indication information may be included in the multicast message, or may be indicated based on separate information. For example, the third information is separately sent in the foregoing step. In addition, the network device may further send location information to each relay device. For example, location information sent to the relay device #1 is 1, location information sent to the relay device #2 is 0, and location information sent to the relay device #3 is 2.

In this case, the relay device #1 determines, based on the index set {2, 1, 0} and the location information 1, that an index corresponding to the relay device #1 is a 2nd index, that is, 1. The index 1 corresponds to a 2nd phase in the phase set $\left\{0, \frac{2\pi}{3}, \frac{4\pi}{3}\right\}$, that is, the relay device #1 determines that a phase corresponding to the relay device #1 is $\frac{2\pi}{3}$. The relay device #2 determines, based on the index set {2, 1, 0} and the location information 0, that an index corresponding to the relay device #2 is a 1st index, that is, 2. The index 2 corresponds to a 3rd

phase in the phase set $\left\{0, \frac{2\pi}{3}, \frac{4\pi}{3}\right\}$, that is, the relay device #2 determines that a phase corresponding to the relay device #2 is $\frac{4\pi}{3}$. The relay device #3 determines, based on the index set {2, 1, 0} and the location information 2, that an index corresponding to the relay device #3 is a 3rd index, that is, 0. The index 0 corresponds to a 1st phase in the phase set $\left\{0, \frac{2\pi}{3}, \frac{4\pi}{3}\right\}$, that is, the relay device #3 determines that a phase corresponding to the relay device #3 is 0.

In another possible implementation, when the network device multicasts the indication information to a relay device that belongs to a relay device group, the multicast message includes time unit information, where the time unit indication information is associated with a group identifier, and indicates a time unit corresponding to a relay device in the relay device group.

For example, the multicast message includes indication information of two symbols occupied by a reference signal #1, and the reference signal #1 corresponds to the relay device group #1.

In addition, the network device may further send indication information of a plurality of phases to the relay device group. For example, the indication information of the plurality of phases indicates that the plurality of phases are:

$$\left\{0, \frac{4\pi}{3}, \frac{2\pi}{3}\right\}.$$

Different relay devices may determine, based on identifiers of the relay devices, phases corresponding to the relay devices. The identifier of the relay device may be understood as phase location indication information, and the information indicates a location of a phase corresponding to the relay device in the phase set. When an identifier of the relay device #1 is 1, it indicates that the phase #1 corresponding to the relay device #1 is a 1st phase in the plurality of phases. **In** this case, the phase #1 is 0. When an identifier of the relay device #2 is 2, it indicates that the phase #2 corresponding to the relay device #2 is a 2nd phase in the plurality of phases. In this case, the phase #2 is $\frac{4\pi}{3}$. When an identifier of the relay device #3 is 3, it indicates that the phase #3 corresponding to the relay device #3 is a 3rd phase in the plurality of phases. In this case, the phase #3 is $\frac{2\pi}{3}$.

For example, the network device may group the plurality of relay devices in coverage into at least one relay device group.

For example, the network device may first determine a plurality of relay devices that may be associated with the terminal device, and then group the plurality of relay devices into several groups. Quantities of relay devices included in the groups may be the same or different. One group of relay devices corresponds to one of the M reference signals. Then, one N' or a plurality of $N'_m$ are configured for the terminal device based on the quantity of relay devices in each group. For example, when the quantities of relay devices included in all the groups are the same, the first configuration information may include information about N', where N' may be equal to a quantity of relay devices included in each group, may be twice or three times a quantity of relay devices included in each group, or the like.

In this embodiment, a division manner in which the network device groups the plurality of relay devices into the at least one relay device group is not limited, and includes but is not limited to:

grouping the plurality of relay devices into the at least one relay device group based on communication capabilities of the plurality of relay devices, grouping the plurality of relay devices into the at least one relay device group based on deployment locations of the plurality of relay devices, and the like.

Optionally, the network device may group the N relay devices into one relay device group, and indication information of time units of the N relay devices is the same. In other words, two time units indicated by relay devices in the relay device group are two time units occupied by a same reference signal in a plurality of reference signals, for example, two symbols occupied by two ports of the same reference signal.

Optionally, phases indicated by relay devices in one relay device group are different. For example, when one relay device group includes four relay devices, phases indicated by the four relay devices may be 0,

$$\frac{\pi}{2}, \pi, \frac{3\pi}{2}.$$

It should be noted that, even if the network device classifies the plurality of relay devices into one relay device group, the network device may still send indication information of a time unit and indication information of a phase via a separate message, instead of necessarily in a form of the foregoing multicast message.

Optionally, when a quantity of reference signals configured by the network device for the terminal device is M, the network device may group M*N (or less than M*N) relay devices into M relay device groups. Indication information of time units of relay devices in each relay device group is the same, and time units of different relay device groups are different. For example, time units indicated by the M groups of relay devices are respectively time units occupied by the M reference signals.

Optionally, for one relay device group, in a time unit in which a reference signal that does not correspond to the relay device group is located, a base station may indicate the relay device group to turn off a forwarding channel.

For example, the network device sends fourth information to the first relay device, where the fourth information indicates the first relay device to turn off a forwarding channel in a third time unit, and the third time unit is a time unit other than the first time unit and the second time unit. The relay device included in the relay device group to which the first relay device belongs turns off a forwarding channel in the third time unit.

Further, after the network device completes the foregoing configuration of the terminal device to measure the reference signal, the network device may send the reference signal to the terminal device. For ease of description, an example in which the network device sends a reference signal to the terminal device is used for description. The method procedure shown in FIG. 6 further includes the following step.

S620: The network device sends a first reference signal to the terminal device, or the terminal device receives the first reference signal from the network device.

Specifically, the network device sends the first reference signal to the terminal device in the first time unit and the second time unit.

It should be understood that the first reference signal is one of the M reference signals configured in step S611, and a time unit occupied by the first reference signal is the first time unit and the second time unit. Therefore, the network device sends the first reference signal in the first time unit and the second time unit.

Optionally, the network device sends the first reference signal via a same antenna port.

It should be understood that, for a sending manner of another reference signal in the M reference signals, refer to the first reference signal. A difference lies in that the network device sends the another reference signal in a different time unit and/or a different frequency-domain unit occupied by a different reference signal. Details are not described herein again.

It can be learned from step S610 that, in this embodiment, the relay device needs to perform downlink forwarding on the reference signal based on a corresponding configuration. In this embodiment, that the network device sends the reference signal to the terminal device includes: The relay device performs downlink forwarding on the reference signal. For ease of description, in this embodiment, an example in which the first relay device forwards the first reference signal is used for description. The method procedure shown in FIG. 6 further includes the following step.

S630: The first relay device performs downlink forwarding in the first time unit and the second time unit.

Specifically, the first relay device superimposes a phase in an indicated time unit: When forwarding the first reference signal, the first relay device superimposes the first phase in the second time unit compared with the first time unit.

For example, the first phase may be additionally superimposed in the second time unit via a phase shifter on a forwarding channel of the first relay device.

For another example, the first phase may be additionally superimposed in the second time unit via a delay gate on a forwarding channel of the first relay device.

For example, the first relay device turns off a forwarding channel in a time unit other than the first time unit and the second time unit. For example, the first relay device receives fourth information from the network device, where the fourth information indicates the first relay device to turn off a forwarding channel in a third time unit, and the third time unit is a time unit other than the first time unit and the second time unit. For example, the third time unit includes a time unit occupied by a reference signal other than the first reference signal in the M reference signals.

It should be understood that when the first relay device belongs to a relay device group, another relay device in the relay device group also performs downlink forwarding in the first time unit and the second time unit. A difference lies in that a different relay device superimposes a different phase in the indicated time unit. Details are not described herein again.

Further, after receiving the first reference signal, the terminal device measures the reference signal based on the configuration information of the reference signal in step S611. The method procedure shown in FIG. 6 further includes the following step.

S640: The terminal device measures the reference signal.

Corresponding to the implementation #1 in step S611, the terminal device measures the M reference signals, and calculates phase differences associated with the K reference signal, where the K reference signals may be K reference signals with maximum RSRPs in the M reference signals, or K reference signals determined in another manner. Alternatively, the terminal device measures the M reference signals, and calculates the phase differences associated with the M reference signals.

For example, the terminal device calculates a first phase difference, and the first phase difference is associated with the first reference signal. That the first phase difference is associated with the first reference signal may be understood as follows: The terminal device may separately estimate an equivalent channel coefficient between the network device and the terminal device based on measurement results of the first reference signal in two time units. The first phase difference is a phase difference between the two equivalent channel coefficients. Specifically, a reference signal received by the terminal device in the first time unit is a signal #1, and a reference signal received in the second time unit is a signal #2. Two equivalent channel coefficients may be determined after the signals received in the two time units are normalized based on the reference signals sent by the network device, to determine the first phase difference.

Corresponding to the implementation #2 in step S611, the terminal device measures the M reference signals, and calculates precoding matrices of the K reference signals and corresponding PMIs, where the K reference signals may be K reference signals with maximum RSRPs in the M reference signals, or K reference signals determined in another manner. Alternatively, the terminal device measures the M reference signals, and calculates precoding matrices of the M reference signals and corresponding PMIs.

For example, the terminal device determines a precoding matrix based on a measurement result of the received first reference signal, and determines a PMI indicating the precoding matrix. Specifically, when there are four ports for the first reference signal, the terminal device receives four signals on four REs in one resource block, and the terminal device determines in advance an orthogonal cover code and four actually to-be-sent signals on the four REs based on configuration information of the network device, so that the terminal device can estimate a channel coefficient matrix, and determine a precoding matrix based on the channel coefficient matrix.

After completing the measurement, the terminal device reports the second information to indicate the first phase difference or the PMI. The method procedure shown in FIG. 6 further includes the following step.

S650: The terminal device sends second information to the network device, or the network device receives the second information from the terminal device.

Corresponding to the implementation #1 in step S611, the second information indicates the first phase difference, and the first phase difference is associated with the first reference signal.

For example, the terminal device may report phase difference indication information of the first reference signal in the two time units.

For example, the second information includes indication information of n, and the information indicates that the first phase difference is $\frac{2n\pi}{N}$.

In a possible implementation, when the quantity M of reference signals configured in step S611 is greater than 1, the terminal device may determine a reference signal with a maximum RSRP in the M reference signals as a target reference signal, and report indication information of the target reference signal (for example, a CRI of the target reference signal) and phase difference indication information associated with the target reference signal. Optionally, the UE may further report an RSRP of the target reference signal.

For example, the network device configures three reference signals for the terminal device: a reference signal #1, a reference signal #2, and a reference signal #3. The reference signal #1 occupies a time unit #1 and a time unit #2, and the relay device group #1 performs downlink forwarding (a relay device in another relay device group turns off a downlink forwarding unit). The reference signal #2 occupies a time unit #3 and a time unit #4, and the relay device group #2 performs downlink forwarding (a relay device in another relay device group turns off a downlink forwarding unit). The reference signal #3 occupies a time unit #5 and a time unit #6, and the relay device group #3 performs downlink forwarding (a relay device in another relay device group turns off a downlink forwarding unit).

After the network device sends the reference signal #1, the reference signal #2, and the reference signal #3 to the terminal device, it is assumed that the terminal device is served by a relay device in the relay device group #1, but the terminal device may also receive reference signals forwarded by a relay device in the relay device group #2 and a relay device in the relay device group #3, but signal quality is poorer than that of the reference signal received from the relay device in the relay device group #1. In this case, the terminal device may determine that a reference signal with a maximum RSRP in the three reference signals is the reference signal #1, and report an identifier of the reference signal #1, or may report an RSRP corresponding to the reference signal #1. The network device may determine that the terminal device is associated with one relay device in the relay device group #1, and may further be distinguished through a phase.

In another possible implementation, when the quantity M of reference signals configured in step S611 is greater than 1, the terminal device may report phase difference indication information corresponding to the M reference signals, and a sequence of the M pieces of phase difference indication information corresponds to a sequence of the M reference signals in the channel measurement resource configuration information. Optionally, the UE may further report M pieces of RSRP indication information, where the M pieces of RSRP indication information respectively correspond to RSRPs of the M reference signals, and a sequence of the M pieces of RSRP indication information corresponds to a sequence of the M reference signals in the channel measurement resource configuration information.

In still another possible implementation, when the quantity M of reference signals configured in step S611 is greater than 1, if the information about the report quantity K is further configured in step S611, the terminal device may determine that K reference signals with large RSRPs in the M reference signals are the reported K reference signals, and the terminal device reports indication information of the K reference signals and phase difference indication information corresponding to the K reference signals. Optionally, the terminal device may further report RSRP indication information corresponding to the K reference signals.

Corresponding to the implementation #2 in step S611, the second information indicates the PMI, and the PMI is associated with the first reference signal.

For example, the terminal device may report the PMI corresponding to the first reference signal.

In a possible implementation, when the quantity M of reference signals configured in step S611 is greater than 1, the terminal device may determine a reference signal with a maximum RSRP in the M reference signals as a target reference signal, and report indication information of the target reference signal and PMI indication information corresponding to a measurement value of the target reference signal. Optionally, the UE may further report an RSRP of the target reference signal.

In another possible implementation, when the quantity M of reference signals configured in step S611 is greater than 1, the terminal device may report PMI indication information corresponding to the M reference signals, and a sequence of the M PMI indication information corresponds to a sequence of the M reference signals in the channel measurement resource configuration information. Optionally, the UE may further report M pieces of RSRP indication information, where the M pieces of RSRP indication information respectively correspond to RSRPs of the M reference signals, and a sequence of the M pieces of RSRP indication information corresponds to a sequence of the M reference signals in the channel measurement resource configuration information.

In still another possible implementation, when the quantity M of reference signals configured in step S611 is greater than 1, if the information about the report quantity K is further configured in step S611, the terminal device may determine that K reference signals with maximum RSRPs in the M reference signals are the reported K reference signals, and the terminal device reports indication information of the K reference signals and PMI indication information corresponding to the K reference signals. Optionally, the terminal device may further report RSRP indication information corresponding to the K reference signals.

Further, the network device determines an association relationship between the terminal device and the relay device based on the second information reported by the terminal and the phase configured for the relay device. The method procedure shown in FIG. 6 further includes the following step.

S660: The network device determines the association relationship between the terminal device and the relay device.

In a possible implementation, corresponding to the implementation #1 in step S611, the network device determines the association relationship between the terminal device and the relay device based on the phase difference reported by the terminal device and the phase configured for the relay device.

For ease of description, an example in which the network device determines the association relationship between the terminal device and the first relay device based on the first phase difference reported by the terminal device and the first phase configured by the network device for the first relay device is used for description.

For example, when the network device configures M=1 reference signals, the phase difference indication information reported by the terminal device indicates a phase $\dfrac{2n\pi}{N}$, and the network device may determine that the relay device associated with the terminal device is the relay device corresponding to the phase $\frac{2n\pi}{N}$ in step S610. For example, if the first phase is $\frac{2n\pi}{N}$, it is determined that the association relationship between the terminal device and the first relay device is association, and the first relay device serves the terminal device. For another example, if the first phase is not $\frac{2n\pi}{N}$, it is determined that the association relationship between the terminal device and the first relay device is not association, and the first relay device does not serve the terminal device.

For another example, when the network device configures M>1 reference signals, the terminal device reports indication information m of one target reference signal and phase difference indication information indicating $\frac{2n\pi}{N}$. The network device may determine that a relay device corresponding to a phase $\frac{2n\pi}{N}$ in a group of relay devices corresponding to the reference signal m is a relay device associated with the UE. For example, if the relay device group to which the first relay device belongs corresponds to the reference signal m, and the first phase is $\frac{2n\pi}{N}$, it is determined that the association relationship between the terminal device and the first relay device is association, and the first relay device serves the terminal device. For another example, if the relay device group to which the first relay device belongs does not correspond to the reference signal m, and/or the first phase is not $\frac{2n\pi}{N}$, it is determined that the association relationship between the terminal device and the first relay device is not association, and the first relay device does not serve the terminal device.

For still another example, when the network device configures M>1 reference signals, the terminal device reports indication information of the K reference signals, RSRPs of the K reference signals, and K pieces of phase difference indication information. The network device may first determine a reference signal m with a maximum RSRP as a target reference signal, and then determine, based on phase difference indication information, for example, an indication $\frac{2n\pi}{N}$, corresponding to the reference signal m reported by the terminal device, that a relay device corresponding to a first phase $\frac{2n\pi}{N}$ in a group of relay devices corresponding to the reference signal m is a relay device associated with the terminal device.

In another possible implementation, corresponding to the implementation #2 in step S611, the network device determines the association relationship between the terminal device and the relay device based on the reported PMI.

Specifically, in this implementation, the network device may determine an equivalent phase difference based on the PMI reported by the terminal device, and then determine the association relationship between the terminal device and the relay device based on the equivalent phase difference.

For example, when the network device configures M=1 reference signals, the PMI indication information reported by the terminal device indicates that the indicated PMI is a PMI #1, the network device determines, based on the PMI #1, that an equivalent phase difference is $\frac{2n\pi}{N}$, and the network device may determine that a relay device associated with the terminal device is the relay device corresponding to the phase $\frac{2n\pi}{N}$ in step S610. For example, if the first phase is $\frac{2n\pi}{N}$, it is determined that the association relationship between the terminal device and the first relay device is association, and the first relay device serves the terminal device.

For another example, if the first phase is not $\frac{2n\pi}{N}$, it is determined that the association relationship between the terminal device and the first relay device is not association, and the first relay device does not serve the terminal device.

For another example, when the network device configures M>1 reference signals, the terminal device reports indication information m of one target reference signal and indication information indicating a PMI #1, and the network device determines, based on the PMI #1, that an equivalent phase difference is $\frac{2n\pi}{N}$. The network device may determine that a relay device corresponding to a phase $\frac{2n\pi}{N}$ in a group of relay devices corresponding to the reference signal m is a relay device associated with the UE. For example, if the relay device group to which the first relay device belongs corresponds to the reference signal m, and the first phase is $\frac{2n\pi}{N}$, it is determined that the association relationship between the terminal device and the first relay device is association, and the first relay device serves the terminal device. For another example, if the relay device group to which the first relay device belongs does not correspond to the reference signal m, and/or the first phase is not $\frac{2n\pi}{N}$, it is determined that the association relationship between the terminal device and the first relay device is not association, and the first relay device does not serve the terminal device.

For still another example, when the network device configures M>1 reference signals, the terminal device reports indication information of the K reference signals, RSRPs of the K reference signals, and K pieces of PMI indication information. The network device may first determine a reference signal m with a maximum RSRP as a target reference signal, and then determine, based on PMI #1 indication information corresponding to the reference signal m reported by the terminal device and the PMI #1, an equivalent phase difference as $\frac{2n\pi}{N}$, and determine that a relay device corresponding to a first phase $\frac{2n\pi}{N}$ in a group of relay devices corresponding to the reference signal m is a relay device associated with the terminal device.

In the communication method shown in FIG. 6, the network device sends, to the relay device, information indicating a time unit (for example, the first information indicating the first time unit and the second time unit), so that the relay device performs downlink forwarding in the indicated time unit, and the network device sends, to the relay device, information indicating a phase (for example, the first information indicating the first phase), so that a phase change is considered when the relay device performs downlink forwarding in different time units (for example, the second time unit is superimposed with the first phase compared with the first time unit when downlink forwarding is performed).

In addition, in the foregoing technical solution, the network device sends the first reference signal in the time unit corresponding to the relay device, and the terminal device reports information associated with the first reference signal, for example, the first phase difference or the PMI. It may be understood that if the terminal device is in coverage of the first relay device and the first relay device performs serving, the first phase difference reported by the terminal device or the equivalent phase difference determined based on the PMI reported by the terminal device should be equal to or close to the first phase configured by the network device for the first relay device. The first relay device additionally superimposes the first phase in the second time unit based on a configuration of the network device when downlink forwarding is performed for the terminal device, in other words, the first phase is additionally superimposed on the equivalent channel in the second time unit of the network device and the terminal device compared with the equivalent channel in the first time unit of the network device and the terminal device.

The network device may determine the association relationship between the terminal device and the relay device based on the information reported by the terminal device and the phase configured by the network device for the relay device. In this way, the relay device that serves the terminal device is determined. In addition, in the communication method shown in FIG. 6, a plurality of relay devices may correspond to a same reference signal, thereby reducing reference signal resource overheads.

For ease of understanding, the following describes the communication method shown in FIG. 6 with reference to a specific example.

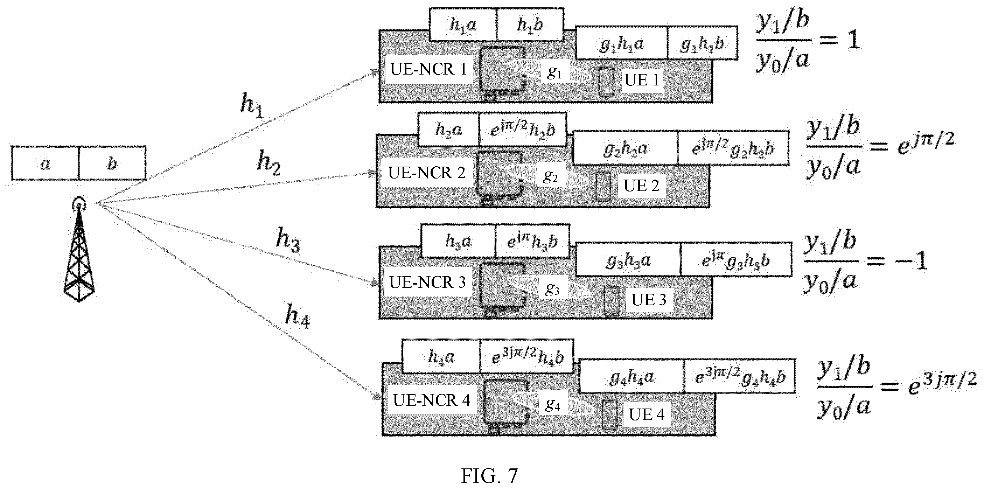

Example 1: An implementation of reporting the phase difference by the terminal device. FIG. 7 is a diagram of an example 1 according to an embodiment of this application.

As shown in FIG. 7, there are N=4 UE-NCRs (or NW-NCRs, where the UE-NCR is used as an example for description in Example 1) in coverage of the network device, that is, a UE-NCR 1 to a UE-NCR 4. The network device needs to determine which UE-NCRs are respectively associated with UE 1 to UE 4, that is, the UE 1 to the UE 4 are respectively in coverage of which UE-NCRs, or which UE-NCRs respectively serve the UE 1 to UE 4.

Specifically, channel coefficients between antenna ports of the network device and donor antenna ports of the four UE-NCRs are respectively denoted as h1 to h4, the UE 1 to the UE4 are respectively located in coverage of the UE-NCR 1 to the UE-NCR 4, a channel coefficient between the UE-NCR 1 and the UE 1 is denoted as $g_1$, a channel coefficient between the UE-NCR 2 and the UE 2 is denoted as $g_2$, a channel coefficient between the UE-NCR 3 and the UE 3 is denoted as $g_3$, and a channel coefficient between the UE-NCR 4 and the UE 4 is denoted as $g_4$.

It is assumed that the UE 1 to the UE 4 cannot receive a signal of a UE-NCR that does not cover the UE 1 to the UE 4 or the received signal is very weak, that is, it is assumed that amplitudes of channel coefficients between the UE 1 and the UE-NCR 2 to the UE-NCR 4 are approximately equal to 0 or amplitudes are very small, and the UE 2 to the UE 4 are similarly assumed. The network device configures M=1 time division multiplexing 2-port reference signals for the terminal device, the reference signal occupies two consecutive symbols in one slot, and the network device indicates four different phases for the four UE-NCRs, which are respectively 0,

$$\frac{\pi}{2}, \pi, \frac{3\pi}{2}.$$

The network device sends the reference signal via a same antenna port. Specifically, a signal sent on a 1st symbol is a, and a signal sent on a 2nd symbol is b. The four UE-NCRs do not superimpose a phase or superimpose a phase 0 on a symbol 0, and separately superimpose phases 0, $\frac{\pi}{2}$, $\pi$, $\frac{3\pi}{2}$ on a symbol 1. Therefore, as shown in FIG. 7, reference signals forwarded by the UE-NCR 1 to the UE-NCR 4 on the 1st symbol are respectively h1a to h4a, and reference signals forwarded on the 2nd symbol are respectively $e^{0j\pi/2}h_1b$ to $e^{3j\pi/2}h_4b$.

A reference signal received by the UE 1 on the 1st symbol is $y_0 = g_1h_1a$, and a reference signal received by the UE 1 on the second symbol is also $y_1 = g_1h_1a$. After

normalizing the reference signal, the UE 1 may determine that a phase difference between the equivalent channel coefficients on the two symbols is 0. Therefore, phase difference indication information reported by the UE 1 indicates that the phase difference is 0, which is the same as a phase 0 indicated by the UE-NCR 1, and the network device may determine that the UE 1 is located in coverage of the UE-NCR 1.

Similarly, phase difference indication information reported by the UE 2 indicates a phase difference $\frac{\pi}{2}$, which is the same as a phase $\frac{\pi}{2}$ indicated by the UE-NCR 2, and the network device may determine that the UE 2 is located in coverage of the UE-NCR 2. Phase difference indication information reported by the UE 3 indicates a phase difference $\pi$, which is the same as a phase $\pi$ indicated by the UE-NCR 3, and the network device may determine that the UE 3 is located in coverage of the UE-NCR 3. Phase difference indication information reported by the UE 4 indicates a phase difference $\frac{3\pi}{2}$, which is the same as a phase $\frac{3\pi}{2}$ indicated by the UE-NCR 4, and the network device may determine that the UE4 is located in coverage of the UE-NCR 4.

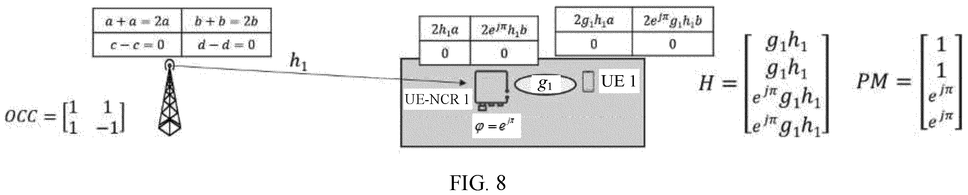

Example 2: An implementation of reporting the PMI by the terminal device. FIG. 8 is a diagram of an example 2 according to an embodiment of this application.

It is assumed that there are N=4 UE-NCRs in coverage of the network device, that is, a UE-NCR 1 to a UE-NCR 4. The network device needs to determine which UE-NCRs are respectively associated with UE 1 to UE 4, that is, the UE 1 to the UE 4 are respectively in coverage of which UE-NCRs, or which UE-NCRs respectively serve the UE 1 to UE 4.

FIG. 8 mainly describes how to determine the association relationship between the terminal device and the relay device when UE is R16 UE (for example, the R16 UE does not support a TDM 2-port reference signal, and does not support phase difference reporting of a 2-port reference signal). For ease of description, FIG. 8 shows only the UE-NCR 1 and the UE 1.

Specifically, a channel coefficient between an antenna port of the network device and a donor antenna port of the UE-NCR 1 is denoted as h1, the UE 1 is located in coverage of the UE-NCR 1, and a channel coefficient between the UE 1 and the UE-NCR 1 is g1. It is assumed that the UE 1 cannot receive a signal of another UE-NCR. The network device configures M=1 reference signals for the UE, a quantity of ports of the reference signal is 4, and the reference signal occupies two consecutive subcarriers and two consecutive symbols in one slot. In addition, the network device indicates a phase $\pi$ for the UE-NCR 1.

The network device sends the reference signal via a same antenna port. It is assumed that before CDM is used, to-be-sent signals on the four REs are respectively a, b, c, and d. Because the reference signal is sent via an orthogonal cover code $\begin{bmatrix} 1 & 1 \\ 1 & -1 \end{bmatrix}$ on the same antenna port, an actually sent reference signal is $\begin{bmatrix} 2a & 2b \\ 0 & 0 \end{bmatrix}$.

The UE-NCR 1 does not superimpose a phase or superimposes a phase 0 on a symbol 0, and superimposes a phase $\pi$ on a symbol 1. Therefore, the reference signal received by the UE 1 is $\begin{bmatrix} 2g_1 h_1 a & 2e^{j\pi} g_1 h_1 c \\ 0 & 0 \end{bmatrix}$. Because the UE 1 can determine the orthogonal cover code and a, b, c, and d based on configuration information of a base station, a channel coefficient matrix that can be estimated by the UE is $H = \begin{bmatrix} g1h1 \\ g1h1 \\ e^{j\pi} g1h1 \\ e^{j\pi} g1h1 \end{bmatrix}$. The UE 1 reports a PMI corresponding to the precoding matrix $\begin{bmatrix} 1 \\ 1 \\ e^{j\pi} \\ e^{j\pi} \end{bmatrix}$.

The network device may determine, based on the PMI reported by the UE 1, that a phase difference between the channel coefficient of the UE 1 on the symbol 1 and the channel coefficient of the UE 1 on the symbol 0 is $\pi$, to determine that the UE 1 is in coverage of the UE-NCR 1.

Optionally, the network device may allocate M>1 reference signals to the UE, and each reference signal is associated with or corresponds to a group of NCRs (not shown in FIG. 7 and FIG. 8). Each group of NCRs turns off a forwarding channel in a time unit in which a reference signal not corresponding to the group of NCRs is located, turns on a forwarding channel in a time unit in which a reference signal corresponding to the group of NCRs is located, and performs phase superimposition according to an indication of the network device. When UE in coverage of a UE-NCR measures M reference signals, an RSRP value measured when the UE-NCR turns on a forwarding channel is large, and an RSRP value measured when the UE-NCR turns off a forwarding channel is small. Therefore, the network device may first determine a group of NCRs according to a reference signal indication and an RSRP value reported by the UE, for example, a group of NCRs corresponding to a reference signal with a maximum RSRP value, and then determine the NCR associated with the reference signal from the group of NCRs according to the method in FIG. 7 or FIG. 8.

It should be understood that sequence numbers of the foregoing processes do not mean execution sequences. The execution sequence of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. For example, in the foregoing embodiments, an example in which a network device configures one phase for each relay device, and the relay device performs downlink forwarding in two time units is mainly used for description. Alternatively, a network device may configure two phases for each relay device, and the relay device performs downlink forwarding in three time units. One of the two phases is added to a second time unit, and the other phase is added to a thrid time unit. In this case, a terminal device also reports two phase differences for a reference signal.

It should be further understood that in some of the foregoing embodiments, a device in a conventional network architecture is mainly used as an example for description (for example, a terminal device). It should be understood that a specific form of the device is not limited in embodiments of this application. For example, all devices that can implement a same function in the future are applicable to embodiments of this application.

It may be understood that in the foregoing method embodiments, the methods and the operations implemented by the device (for example, the network device, the relay device, or the terminal device) may also be implemented by a component (for example, a chip or a circuit) of the device.

The foregoing describes in detail, with reference to FIG. 6, the communication method provided in embodiments of this application. The foregoing communication method is mainly described from perspectives of the network device, the relay device, and the terminal device. It can be understood that to implement the foregoing functions, the network device, the relay device, and the terminal device include corresponding hardware structures and/or software modules for implementing the functions.

A person skilled in the art should be able to be aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

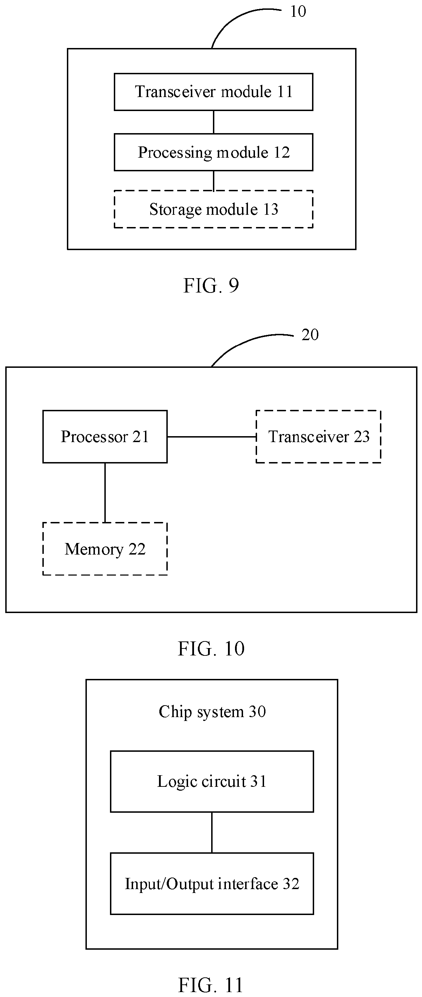

The following describes in detail communication apparatuses provided in embodiments of this application with reference to FIG. 9 and FIG. 11. It should be understood that descriptions of apparatus embodiments correspond to the descriptions of the method embodiments. Therefore, for content that is not described in detail, refer to the foregoing method embodiments. For brevity, some content is not described again.

In embodiments of this application, the transmit end device or the receive end device may be divided into function modules based on the foregoing method example. For example, each function module may be obtained through division corresponding to each function, or two or more functions may be integrated in one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

FIG. 9 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, for the apparatus to implement an action of the device in the foregoing method embodiments.

In a first design, the apparatus 10 may correspond to the network device in the foregoing method embodiments, or may be a component (for example, a chip) of the network device.

The apparatus 10 may implement corresponding steps or procedures performed by the network device in the foregoing method embodiments. The transceiver module 11 may be configured to perform receiving and sending related operations of the network device in the foregoing method embodiments. The processing module 12 may be configured to perform processing related operations of the network device in the foregoing method embodiments.

In a possible implementation, the transceiver module 11 is configured to send first information to a first relay device, where the first information indicates a first time unit, a second time unit, and a first phase.

The transceiver module 11 is configured to send a first reference signal to a terminal device in the first time unit and the second time unit.

The transceiver module 11 is configured to receive second information from the terminal device, where the second information indicates a first phase difference or a precoding matrix index PMI, the first phase difference is associated with the first reference signal, the PMI is used to indicate a precoding matrix, and the precoding matrix is associated with the first reference signal.

The processing module 12 is configured to determine an association relationship between the first relay device and the terminal device based on the first phase difference and the first phase; or the processing module 12 is configured to determine an association relationship between the first relay device and the terminal device based on the PMI and the first phase.

When the apparatus 10 is configured to perform the method in FIG. 6, the transceiver module 11 may be configured to perform steps of sending information in the method, for example, steps S611, S610, S620, and S650; and the processing module 12 may be configured to perform a processing step in the method, for example, step S660.

It should be understood that a specific process in which the units perform the foregoing corresponding steps is described in detail in the foregoing method embodiments. For brevity, details are not described herein.

In another design, the apparatus 10 may correspond to the relay device in the foregoing method embodiments, or may be a component (for example, a chip) of the relay device.

The apparatus 10 may implement corresponding steps or procedures performed by the relay device in the foregoing method embodiments. The transceiver module 11 may be configured to perform receiving and sending related operations of the relay device in the foregoing method embodiments. The processing module 12 may be configured to perform processing related operations of the relay device in the foregoing method embodiments.

In a possible implementation, the transceiver module 11 is configured to receive first information from a network device, where the first information indicates a first time unit, a second time unit, and a first phase.

The transceiver module 11 is configured to perform downlink forwarding in the first time unit and the second time unit.

The second time unit is superimposed with the first phase compared with the first time unit when the transceiver module 11 performs downlink forwarding.

When the apparatus 10 is configured to perform the method in FIG. 6, the transceiver module 11 may be configured to perform steps of sending information in the method, for example, step S610; and the processing module 12 may be configured to perform a processing step in the method, for example, step S630.

It should be understood that a specific process in which the units perform the foregoing corresponding steps is described in detail in the foregoing method embodiments. For brevity, details are not described herein.

In still another design, the apparatus 10 may correspond to the terminal device in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving and sending related operations of the terminal device in the foregoing method embodiments. The processing module 12 may be configured to perform processing related operations of the terminal device in the foregoing method embodiments.

In a possible implementation, the transceiver module 11 is configured to receive a first reference signal from a network device in a first time unit and a second time unit.

The processing module 12 is configured to determine a first phase difference based on the first reference signal received in the first time unit and the second time unit, or determine a precoding matrix index PMI based on a measurement result of the first reference signal.

The transceiver module 11 is configured to send second information to the network device, where the second information indicates the first phase difference or the PMI.

When the apparatus 10 is configured to perform the method in FIG. 6, the transceiver module 11 may be configured to perform steps of sending information in the method, for example, steps S611, S620, and S650; and the processing module 12 may be configured to perform a processing step in the method, for example, step S640.

It should be understood that a specific process in which the units perform the foregoing corresponding steps is described in detail in the foregoing method embodiments. For brevity, details are not described herein.

It should be further understood that the apparatus 10 herein is embodied in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by the device (for example, the network device, the relay device, or the terminal device) in the foregoing methods. This function may be implemented by using hardware, or may be implemented by executing corresponding software by hardware. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to separately perform a receiving and sending operation and a related processing operation in each method embodiment.

In addition, the transceiver module 11 may be a transceiver circuit (for example, may include a receiver circuit and a transmitter circuit), and the processing module may be a processing circuit.

FIG. 10 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 10, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 10, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the network device, the relay device, or the terminal device in the foregoing method embodiments.

It should be understood that, the processor in embodiments of this application may be a central processing unit (central processing unit, CPU), or may further be another general-purpose processor, a digital signal processor (digital signal processor, DSP), an application-specific integrated circuit (application specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be further noted that the memory described in this specification aims to include but is not limited to these memories and any memory of another proper type.

FIG. 11 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the network device, the relay device, or the terminal device in the foregoing method embodiments.

For example, the logic circuit 31 is configured to implement processing-related operations performed by the network device, the relay device, or the terminal device in the foregoing method embodiments, and the input/output interface 32 is configured to implement receiving and/or sending-related operations performed by the network device, the relay device, or the terminal device in the foregoing method embodiments.

An embodiment of this application further provides a computer-readable storage medium. The computer-readable storage medium stores computer instructions for implementing a method performed by a device in the foregoing method embodiments.

For example, when the computer program is executed by a computer, the computer is enabled to implement the method performed by the network device, the relay device, or the terminal device in the foregoing method embodiments.

An embodiment of this application further provides a computer program product, including instructions. When the instructions are executed by a computer, the method performed by the network device, the relay device, or the terminal device in the foregoing method embodiments is implemented.

An embodiment of this application further provides a communication system, including the foregoing network device, the relay device, and the terminal device.

For descriptions and beneficial effect of related content of any one of the apparatuses provided above, refer to a corresponding method embodiment provided above. Details are not described herein again.

**In** the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer- readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   sending, by a network device, first information to a first relay device, wherein the first information indicates a first time unit, a second time unit, and a first phase;
   sending, by the network device, a first reference signal to a terminal device in the first time unit and the second time unit; and
   receiving, by the network device, second information from the terminal device, wherein
   the second information indicates a first phase difference, the first phase difference is associated with the first reference signal, and the first phase difference and the first phase are used to determine an association relationship between the first relay device and the terminal device; or
the second information indicates a precoding matrix index PMI, the PMI indicates a precoding matrix, the precoding matrix is associated with the first reference signal, and the PMI and the first phase are used to determine an association relationship between the first relay device and the terminal device.

2. The method according to claim 1, wherein that the first information indicates a first time unit, a second time unit, and a first phase comprises: the first information indicates the first relay device to perform downlink forwarding in the first time unit and the second time unit, and indicates that the second time unit is superimposed with the first phase compared with the first time unit when the first relay device performs downlink forwarding.

3. The method according to claim 1 or 2, wherein the first phase is one phase in a first phase set, the first phase set comprises N phases, and N is a positive integer.

4. The method according to claim 3, wherein before the sending, by a network device, first information to a first relay device, the method further comprises: sending, by the network device, third information to the first relay device, wherein the third information indicates the first phase set.

5. The method according to claim 4, wherein that the first information indicates a first phase comprises: the first information comprises information about a first index, and the first index indicates an index of the first phase in the first phase set.

6. The method according to claim 4, wherein

   the sending, by a network device, first information to a first relay device comprises:
   sending, by the network device, first multicast information to the first relay device, wherein the first multicast information comprises the first information, the first multicast information comprises information about a plurality of indexes, an index of the first phase in the first phase set is a first index, and the first index is one of the plurality of indexes; and
   the method further comprises:
   sending, by the network device, first location information to the first relay device, wherein the first location information indicates a location of the first index in the plurality of indexes.

7. The method according to any one of claims 1 to 6, wherein

   the sending, by a network device, first information to a first relay device comprises:
   sending, by the network device, second multicast information to the first relay device, wherein the second multicast information comprises the first information, the second multicast information comprises indication information of a plurality of phases, and the first phase is one of the plurality of phases; and
   the method further comprises:
   sending, by the network device, second location information to the first relay device, wherein the second location information indicates a location of the first phase in the plurality of phases.

8. The method according to any one of claims 3 to 7, wherein the first phase difference is one phase in a second phase set, the second phase set comprises N' phases, and N' is a positive integer.

9. The method according to claim 8, wherein N is equal to N', and the first phase set and the second phase set each comprise:

$$\left\{0, \ \frac{2\pi}{N}, \frac{4\pi}{N}, \dots, \frac{2(N-1)\pi}{N}\right\}.$$

10. The method according to any one of claims 1 to 9, wherein the method further comprises:
sending, by the network device, fourth information to the first relay device, wherein the fourth information indicates the first relay device to turn off a forwarding channel in a third time unit, and the third time unit is a time unit other than the first time unit and the second time unit.

11. The method according to any one of claims 1 to 10, wherein the method further comprises:

   sending, by the network device, fifth information to a second relay device, wherein the fifth information indicates the first time unit, the second time unit, and a second phase; and
   determining, by the network device, an association relationship between the second relay device and the terminal device based on the first phase difference and the second phase; or
   determining, by the network device, an association relationship between the second relay device and the terminal device based on the PMI and the second phase.

12. The method according to claim 11, wherein the first relay device and the second relay device belong to a first relay device group, and the first relay device group corresponds to the first time unit and the second time unit.

13. The method according to any one of claims 1 to 12, wherein
when the first phase is equal to the first phase difference or a second phase difference, the first relay device is a relay device corresponding to the terminal device, wherein the second phase difference is associated with the PMI.

14. The method according to any one of claims 1 to 13, wherein the method further comprises:

sending, by the network device, first configuration information to the terminal device, wherein the first configuration information indicates the terminal device to measure M reference signals and report K phase differences, K is less than or equal to M, and K and M are positive integers; and
there are at least two ports for each of the M reference signals, each of the M reference signals comprises at least two consecutive time units, the first reference signal is one of the M reference signals, and the first phase difference is one of the K phase differences.

15. The method according to any one of claims 1 to 14, wherein the method further comprises:
sending, by the network device, second configuration information to the terminal device, wherein the second configuration information indicates the terminal device to measure M reference signals and report K PMIs, K is less than or euqal to M, and K and M are positive integers; and there are at least four ports for each of the M reference signals, each of the M reference signals comprises at least two consecutive time units, the first reference signal is one of the M reference signals, and the PMI is a PMI corresponding to the first reference signal in the K PMIs.

16. The method according to claim 15, wherein the second configuration information further comprises at least one of the following information: information indicating an antenna dimension of the network device, information indicating a rank of the precoding matrix, or information indicating a codebook type.

17. A communication method, comprising:

receiving, by a first relay device, first information from a network device, wherein the first information indicates a first time unit, a second time unit, and a first phase; and
performing, by the first relay device, downlink forwarding in the first time unit and the second time unit, wherein
the second time unit is superimposed with the first phase compared with the first time unit when the first relay device performs downlink forwarding.

18. The method according to claim 17, wherein the first phase is one phase in a first phase set, the phase set comprises N phases, and N is a positive integer.

19. The method according to claim 18, wherein before the receiving, by a first relay device, first information from a network device, the method further comprises: receiving, by the first relay device, third information from the network device, wherein the third information indicates the first phase set.

20. The method according to claim 19, wherein that the first information indicates a first phase comprises: the first information comprises information about a first index, and the first index indicates an index of the first phase in the first phase set.

21. The method according to claim 19, wherein

the receiving, by a first relay device, first information from a network device comprises:
receiving, by the first relay device, first multicast information from the network device, wherein the first multicast information comprises the first information, the first multicast information comprises indication information of a plurality of indexes, an index of the first phase in the first phase set is a first index, and the first index is one of the plurality of indexes; and
the method further comprises:
receiving, by the first relay device, first location information from the network device, wherein the first location information indicates a location of the first index in the plurality of indexes.

22. The method according to any one of claims 17 to 21, wherein

the receiving, by a first relay device, first information from a network device comprises:
receiving, by the first relay device, second multicast information from the network device, wherein the second multicast information comprises the first information, the second multicast information comprises indication information of a plurality of phases, and the first phase is one of the plurality of phases; and
the method further comprises:
receiving, by the first relay device, second location information from the network device, wherein the second location information indicates a location of the first phase in the plurality of phases.

23. The method according to any one of claims 18 to 22, wherein the first phase set comprises:

$$\left\{0, \ \frac{2\pi}{N}, \frac{4\pi}{N}, \ldots, \frac{2(N-1)\pi}{N}\right\}.$$

**24.** The method according to any one of claims 17 to 23, wherein the method further comprises:
receiving, by the first relay device, fourth information from the network device, wherein the fourth information indicates the first relay device to turn off a forwarding channel in a third time unit, and the third time unit is a time unit other than the first time unit and the second time unit.

**25.** A communication method, comprising:

receiving, by a terminal device, a first reference signal from a network device in a first time unit and a second time unit;
determining, by the terminal device, a first phase difference based on the first reference signal received in the first time unit and the second time unit, or determining a precoding matrix index PMI based on a measurement result of the first reference signal; and
sending, by the terminal device, second information to the network device, wherein the second information indicates the first phase difference or the PMI.

**26.** The method according to claim 25, wherein the first phase difference is one phase in a second phase set, the second phase set comprises N' phases, and N' is a positive integer; and
the second phase set comprises:

$$\left\{0, \ \frac{2\pi}{N'}, \frac{4\pi}{N'}, \ldots, \frac{2(N'-1)\pi}{N'}\right\}.$$

**27.** A network device, wherein the network device comprises a processor and a memory, the processor is coupled to the memory, the memory is configured to store a computer program, and when the processor runs the computer program, the network device is enabled to perform the method according to any one of claims 1 to 16.

**28.** A first relay device, wherein the first relay device comprises a processor and a memory, the processor is coupled to the memory, the memory is configured to store a computer program, and when the processor runs the computer program, the first relay device is enabled to perform the method according to any one of claims 17 to 24.

**29.** A computer-readable storage medium, wherein the computer-readable storage medium stores computer instructions, and when the computer instructions are run on a network device, the network device is enabled to perform the method according to any one of claims 1 to 16; or when the computer instructions are run on a first relay device, the first relay device is enabled to perform the method according to any one of claims 17 to 24.

**30.** A computer program product, comprising instructions, wherein when the computer instructions are run on a network device, the network device is enabled to perform the method according to any one of claims 1 to 16; or when the computer instructions are run on a first relay device, the first relay device is enabled to perform the method according to any one of claims 17 to 24.

**31.** A chip, wherein the chip comprises a processor and a communication interface, the processor reads and runs instructions through the communication interface, and when the chip is installed in a network device, the network device is enabled to perform the method according to any one of claims 1 to 16; or when the chip is installed in a first relay device, the first relay device is enabled to perform the method according to any one of claims 17 to 24.

**32.** A communication system, wherein the communication system comprises a network device, a terminal device, and a first relay device, the terminal device is configured to perform the method according to claim 25 or 26, the network device is configured to perform the method according to any one of claims 1 to 16, and the first relay device is configured to perform the method according to any one of claims 17 to 24.

FIG. 1

FIG. 2

FIG. 3

FIG. 4

FIG. 5

FIG. 6

FIG. 7

FIG. 8

10

Transceiver module 11

Processing module 12

Storage module 13

FIG. 9

20

Processor 21

Transceiver 23

Memory 22

FIG. 10

Chip system 30

Logic circuit 31

Input/Output interface 32

FIG. 11

## INTERNATIONAL SEARCH REPORT

| International application No. |
|---|
| **PCT/CN2023/110316** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, CNKI: 中继节点, 中继器, 中继设备, 中继装置, 参考信号, 第二时间, 叠加, 估计, 关联, 计算, 确定, 相位, 相位差, 预编码矩阵, 选择, 确定, reference signal, rs, network controlled repeater, ncr, repeater, relay, rn, phase, phase difference, pmi, terminal, ue, association, select+, determin+

**C. DOCUMENTS CONSIDERED TO BE RELEVANT**

| Category* | Citation of document, with indication, where appropriate, of the relevant passages | Relevant to claim No. |
|---|---|---|
| X | US 2016212738 A1 (TELEFONAKTIEBOLAGET LM ERICSSON (PUBL)) 21 July 2016 (2016-07-21) description, paragraphs 0048-0056 | 25-26 |
| A | CN 102265526 A (ERICSSON (CHINA) COMMUNICATION CO., LTD.) 30 November 2011 (2011-11-30) entire document | 1-32 |
| A | CN 113711641 A (BEIJING XIAOMI MOBILE SOFTWARE CO., LTD.) 26 November 2021 (2021-11-26) entire document | 1-32 |
| A | WO 2021168848 A1 (QUALCOMM INC.) 02 September 2021 (2021-09-02) entire document | 1-32 |
| A | US 2018069664 A1 (INTEL CORPORATION) 08 March 2018 (2018-03-08) entire document | 1-32 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **18 October 2023** | **25 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | | International application No. |
|---|---|---|
| | | **PCT/CN2023/110316** |

| Patent document<br>cited in search report | | | Publication date<br>(day/month/year) | Patent family member(s) | | | Publication date<br>(day/month/year) |
|---|---|---|---|---|---|---|---|
| US | 2016212738 | A1 | 21 July 2016 | WO | 2015030638 | A1 | 05 March 2015 |
| CN | 102265526 | A | 30 November 2011 | US | 2011177823 | A1 | 21 July 2011 |
| | | | | RU | 2011112856 | A | 10 October 2012 |
| | | | | EP | 2327172 | A1 | 01 June 2011 |
| | | | | WO | 2010025585 | A1 | 11 March 2010 |
| | | | | JP | 2012502514 | A | 26 January 2012 |
| | | | | AU | 2008361474 | A1 | 11 March 2010 |
| CN | 113711641 | A | 26 November 2021 | WO | 2023000149 | A1 | 26 January 2023 |
| WO | 2021168848 | A1 | 02 September 2021 | CN | 115152275 | A | 04 October 2022 |
| | | | | KR | 20220148813 | A | 07 November 2022 |
| | | | | US | 2023053351 | A1 | 23 February 2023 |
| | | | | EP | 4111746 | A1 | 04 January 2023 |
| US | 2018069664 | A1 | 08 March 2018 | HK | 1247473 | A1 | 21 September 2018 |
| | | | | WO | 2016164084 | A1 | 13 October 2016 |
| | | | | EP | 3281326 | A1 | 14 February 2018 |
| | | | | CN | 107431557 | A | 01 December 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210916121

- CN 202211130878